(19) Europäisches Patentamt
European Patent Office
Office européen des brevets

(11) **EP 4 135 076 A1**

(12) # EUROPEAN PATENT APPLICATION
published in accordance with Art. 153(4) EPC

(43) Date of publication:
**15.02.2023 Bulletin 2023/07**

(21) Application number: **21784105.5**

(22) Date of filing: **09.04.2021**

(51) International Patent Classification (IPC):
**H01M 4/86** (1974.07)        **H01M 8/10** (1974.07)

(52) Cooperative Patent Classification (CPC):
**H01M 4/86; H01M 8/10;** Y02E 60/50

(86) International application number:
**PCT/JP2021/015062**

(87) International publication number:
**WO 2021/206171 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2020 JP 2020070590**

(71) Applicant: **TOPPAN INC.**
**Tokyo 110-0016 (JP)**

(72) Inventor: **KISHI Katsuyuki**
**Tokyo 110-0016 (JP)**

(74) Representative: **Hoffmann Eitle**
**Patent- und Rechtsanwälte PartmbB**
**Arabellastraße 30**
**81925 München (DE)**

(54) **MEMBRANE-ELECTRODE ASSEMBLY, AND SOLID POLYMER FUEL CELL**

(57)     There are provided a membrane electrode assembly that can enhance power generation performance, and a polymer electrolyte fuel cell. The membrane electrode assembly (10) for use in a polymer electrolyte fuel cell according to an aspect of the present invention includes a polyelectrolyte membrane (11), a fuel electrode-side electrocatalyst layer (12A), and an oxygen electrode-side electrocatalyst layer (12C). The fuel electrode- and oxygen electrode-side electrocatalyst layers (12A) and (12C) contain voids which include pores having a diameter in the range of 3 nm or more and 5.5 $\mu$m or less. When the integrated pore volume for all the pores in the fuel electrode- and oxygen electrode-side electrocatalyst layers (12A) and (12C) is a first integrated volume, the value obtained by dividing the first integrated volume by the mass of the catalytic material contained in both of the electrocatalyst layers is in the range of 2.8 or more and 4.5 or less.

## FIG.1

EP 4 135 076 A1

**Description**

[Technical Field]

The present invention relates to membrane electrode assemblies and polymer electrolyte fuel cells.

[Background Art]

Fuel cells generate electrical current through a chemical reaction between hydrogen and oxygen. Fuel cells are drawing attention as clean energy sources having higher efficiency, lower environmental load, and lower noise than those of conventional power generation systems. In particular, polymer electrolyte fuel cells, which can be used at room temperature or thereabout, are expected to be applied to in-vehicle power sources, domestic stationary power sources, or the like.

In general, polymer electrolyte fuel cells have a structure in which several single cell units are laminated together. A single cell unit has a structure in which one membrane electrode assembly is sandwiched between two separators. The membrane electrode assembly includes a polyelectrolyte membrane, a fuel electrode (anode) that supplies fuel gas, and an oxygen electrode (cathode) that supplies an oxidant. The fuel electrode is bonded to a first surface of the polyelectrolyte membrane, and the oxygen electrode is bonded to a second surface facing away from the first surface. The separators each include gas flow channels and cooling water flow channels. The fuel electrode and the oxygen electrode each include an electrocatalyst layer and a gas diffusion layer. In each electrode, the electrocatalyst layer is in contact with the polyelectrolyte membrane. The electrocatalyst layer contains a catalytic material, such as a platinum-based noble metal, an electrically conductive carrier, and a polyelectrolyte. The gas diffusion layer has gas permeability and electrical conductivity.

Such a polymer electrolyte fuel cell generates electrical current through an electrochemical reaction as follows. First, in the electrocatalyst layer of the fuel electrode, hydrogen contained in the fuel gas is oxidized by the catalytic material to generate protons and electrons. The generated protons pass through the polyelectrolyte in the electrocatalyst layer and the polyelectrolyte membrane and reach the electrocatalyst layer of the oxygen electrode. The electrons generated together with the protons pass through the electrically conductive carrier in the electrocatalyst layer, the gas diffusion layer, the separator, and an external circuit and reach the electrocatalyst layer of the oxygen electrode. In the electrocatalyst layer of the oxygen electrode, the protons and electrons react with oxygen contained in the oxidant gas to produce water.

The gas diffusion layer diffuses the gas supplied from the separator and supplies the diffused gas to the electrocatalyst layer. The electrocatalyst layer has pores for transporting multiple materials, such as gas and produced water. The pores of the fuel electrode are required to smoothly supply the fuel gas to a three-phase interface, which is a redox reaction site. The pores of the oxygen electrode are required to smoothly supply the oxidant gas into the electrocatalyst layer. In order to smoothly supply the fuel gas or oxygen gas, or further, in order to enhance the power generation performance of the fuel cell, intervals are required to be provided between the pores of the electrocatalyst layer to minimize regions of high pore density. As a configuration for minimizing regions of high pore density, for example, electrocatalyst layers containing carbon particles or carbon fibers have been proposed (e.g., refer to PTLs 1 and 2).

[Citation List]

[Patent Literatures]

PTL 1: JP H10-241703 A

PTL 2: JP 5537178 B

[Summary of the Invention]

[Technical Problem]

In PTL 1, carbon particles having different sizes (average primary particle size) are combined with each other to minimize regions of high pore density in the electrocatalyst layer. In PTL 2, carbon fibers having different lengths are combined with each other to minimize regions of high pore density in the electrocatalyst layer. Even if the combination of size of the carbon particles is the same between layers, the size and distribution of the pores may be different between the layers, depending on the composition, the formation conditions, and the like of the layers. Similarly, even if the combination of length of the carbon fibers is the same between layers, the size and distribution of the pores may be different between the layers. Power generation performances of fuel cells greatly depend on the size and distribution of pores. Therefore, from the perspective of enhancing power generation performance, there is still room for improving the method in which combinations of carbon particles or carbon fibers are used.

The present invention has been made in light of such circumstances and aims to provide a membrane electrode assembly that can enhance power generation performance, and a polymer electrolyte fuel cell.

[Solution to Problem]

An aspect of a membrane electrode assembly for solving the above issues is a membrane electrode assembly for use in a polymer electrolyte fuel cell, including: a polyelectrolyte membrane having a first surface and a second surface facing away from the first surface; a fuel electrode-side electrocatalyst layer bonded to the first surface and containing a first catalytic material, a first electrically conductive carrier supporting the first catalytic material, and a first polyelectrolyte; and an oxygen electrode-side electrocatalyst layer bonded to the second surface and containing a second catalytic material, a second electrically conductive carrier supporting the second catalytic material, a second polyelectrolyte, and a fibrous material. In the membrane electrode assembly, the fuel electrode-side electrocatalyst layer and the oxygen electrode-side electrocatalyst layer contain voids which include pores having a diameter of 3 nm or more and 5.5 $\mu$m or less; a pore size, that is a pore diameter, is calculated from a pore volume which is measured using mercury intrusion porosimetry; and when an integrated pore volume for all the pores in the fuel electrode side-electrocatalyst layer and the oxygen electrode-side electrocatalyst layers is a first integrated volume, a value obtained by dividing the first integrated volume by a mass of a catalytic material, that is a mass of the catalytic material contained in both of the electrocatalyst layers, is in a range of 2.8 or more and 4.5 or less.

An aspect of a polymer electrolyte fuel cell for solving the above issues is a polymer electrolyte fuel cell including the above membrane electrode assembly.

[Advantageous Effects of the Invention]

According to the present invention, power generation performance of a polymer electrolyte fuel cell can be enhanced.

[Brief Description of the Drawings]

Fig. 1 is a schematic cross-sectional view illustrating a structure of a membrane electrode assembly according to a first embodiment of the present invention.
Fig. 2 is a schematic diagram illustrating a structure of an electrocatalyst layer of the membrane electrode assembly shown in Fig. 1.
Fig. 3 is a schematic exploded perspective view illustrating a structure of a polymer electrolyte fuel cell including the membrane electrode assembly shown in Fig. 1.
Fig. 4 is a graph illustrating pore size distribution curves according to examples and comparative examples.
Fig. 5 is a graph illustrating relationships between pore size and cumulative pore volume ratio according to examples and comparative examples.
Fig. 6 is a graph illustrating an example of pore size distribution curves in an electrocatalyst layer according to a second embodiment of the present invention.

[Description of the Embodiments]

[First Embodiment]

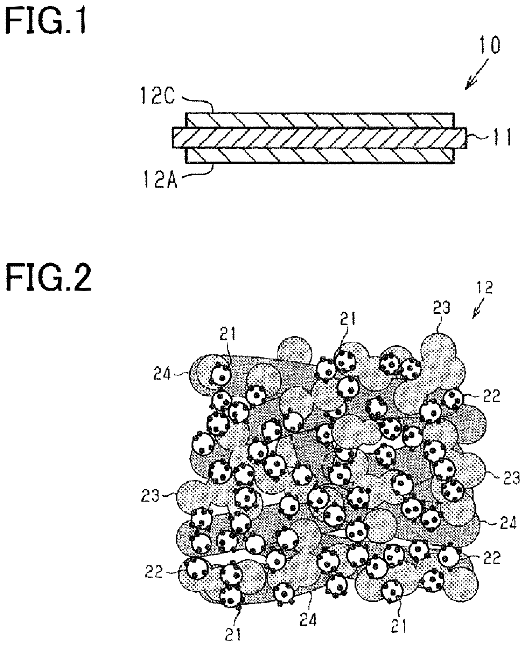

Referring to Figs. 1 to 5, a first embodiment of an electrocatalyst layer, a membrane electrode assembly, and a polymer electrolyte fuel cell will be described. Hereinafter, configurations of a membrane electrode assembly, an electrocatalyst layer, single cell units configuring a polymer electrolyte fuel cell, a method of producing the membrane electrode assembly, and examples will be described in this order.

[Membrane electrode assembly]

Referring to Fig. 1, a configuration of a membrane electrode assembly will be described. Fig. 1 shows a cross-sectional structure of a membrane electrode assembly in the thickness direction.

As shown in Fig. 1, a membrane electrode assembly 10 includes a polyelectrolyte membrane 11, an oxygen electrode-side electrocatalyst layer 12C, and fuel electrode-side electrocatalyst layer 12A. The polyelectrolyte membrane 11 is a solid-state polyelectrolyte membrane, i.e., a solid polyelectrolyte membrane. The polyelectrolyte membrane 11 has two surfaces facing away from each other, one being provided with the oxygen electrode-side electrocatalyst layer 12C bonded thereto, and the other being provided with the fuel electrode-side electrocatalyst layer 12A bonded thereto. In the polyelectrolyte membrane 11, the surface to which the fuel electrode-side electrocatalyst layer 12A is bonded is a first surface, and the surface to which the oxygen electrode-side electrocatalyst layer 12C is bonded is a second surface. The oxygen electrode-side electrocatalyst layer 12C configures an oxygen electrode (cathode), and the fuel electrode-side electrocatalyst layer 12A configures a fuel electrode (anode). These electrocatalyst layers 12 may have peripheries sealed with gaskets or the like (not shown).

[Electrocatalyst layer]

Referring to Fig. 2, the configuration of an electrocatalyst layer provided to the membrane electrode assembly 10 will be described in more detail. The electrocatalyst layer described below has a configuration that is applied to both the oxygen electrode- and fuel electrode-side electrocatalyst layers 12C and 12A, but may be applied to only either one of the oxygen electrode- and fuel electrode-side electrocatalyst layers 12C and 12A.

As shown in Fig. 2, an electrocatalyst layer 12 contains a catalytic material 21, an electrically conductive carrier 22, a polyelectrolyte 23, and a fibrous material 24. The electrocatalyst layer 12 does not necessarily have to contain the fibrous material 24. Specifically, the fuel electrode-side electrocatalyst layer 12A does not necessarily have to contain the fibrous material 24. In the electrocatalyst layer 12, the portions containing none of the catalytic material 21, electrically conductive carrier 22, polyelectrolyte 23, and fibrous material 24 are voids. In the present embodiment, voids having a diameter of 3 nm or more and 5.5 $\mu$m or less are defined to be pores.

In the electrocatalyst layer 12, the pore diameter which is calculated from a pore volume Vp measured using mercury intrusion porosimetry is a pore size D. It should be noted that the pore size D is defined to be a size D of a cylindrical model pore acquired using mercury intrusion porosimetry.

Specifically, the fuel electrode side electrocatalyst layer 12A and the oxygen electrode-side electrocatalyst layer 12C contain voids which include pores having a diameter of 3 nm or more and 5.5 $\mu$m or less. The pore diameter, i.e., a pore size D, is calculated from a pore volume Vp which is measured using mercury intrusion porosimetry.

Description will now be given of distribution of the pore volume Vp mentioned above. Distribution of the pore volume Vp is expressed as a distribution function of the pore volume Vp with respect to pore size D (3 nm$\leq$D$\leq$5.5 $\mu$m) (=dVp/dlogD) (log differential pore volume distribution). Distribution of the pore volume Vp is obtained using mercury intrusion porosimetry.

Since mercury has a high surface tension, a predetermined pressure P is required to be applied thereto for penetration into pores. Distribution of the pore volume Vp or a specific surface area can be calculated from the pressure P applied to the mercury for penetration into the pores, and the amount of mercury intruded into the pores. The relationship between the applied pressure P and the pore size D allowing mercury to penetrate the pores with the pressure P can be expressed by Formula (1) which is known as Washburn's equation. In Formula (1) below, $\gamma$ is the surface tension of mercury, and $\theta$ is the contact angle between mercury and a pore wall surface. In the present embodiment, a pore size D is calculated assuming the surface tension $\gamma$ to be 0.48 N/m and the contact angle $\theta$ to be 130∘..

$$D = -4\gamma\cos\theta/P \quad \dots (1)$$

It should be noted that, in actual measurements using mercury intrusion porosimetry, the volume of intruded mercury is recorded every time a different pressure P is applied. Each pressure P is converted to a pore size D based on Formula (1). Assuming that the volume of the intruded mercury is equal to the pore volume Vp, a pore volume increase dV is plotted against the pore size D. The pore volume increase dV in this case is an increase of the pore volume Vp when the pore size has increased from D to D+dD. The peak of the plot is the peak of the distribution of the pore volume Vp.

Functions required for enhancing power generation performance in the electrocatalyst layer 12 may be, for example, maintaining a three-phase interface in the electrocatalyst layer 12, diffusing gas in the electrocatalyst layer 12, and draining water produced in the electrocatalyst layer 12. In order to enhance these functions, voids are required to be present in the electrocatalyst layer 12. A suitable amount of voids depends on the amount of the catalytic material undergoing an electrochemical reaction. The pore size D suitable for maintaining the three-phase interface, the pore size D suitable for diffusing gas, and the pore size D suitable for draining produced water do not have to be necessarily the same. The pore size D suitable for enhancing power generation performance needs to satisfy these pore sizes D.

The electrocatalyst layers 12, i.e., the fuel electrode-side electrocatalyst layer 12A and/or the oxygen electrode-side electrocatalyst layer 12C, need to satisfy at least one of the following Conditions 1 to 3.

[Condition 1]

In Condition 1, the pore size D at the peak of the distribution curve indicating distribution of the pore volume Vp plotted against the pore size D is in the range of 0.06 $\mu$m or more and 0.11 $\mu$m or less (0.06 $\mu$m $\leq$ D $\leq$ 0.11 $\mu$m). The pore size D at the peak of the distribution curve is preferred to be in the range of 0.07 $\mu$m or more and 0.11 $\mu$m or less (0.07 $\mu$m $\leq$ D $\leq$ 0.11 $\mu$m). If the pore size D at the peak of the distribution curve is in the range of 0.06 $\mu$m or more and 0.11 $\mu$m or less, the electrocatalyst layer 12 can contain voids with a size for achieving sufficient gas diffusion and drainage.

[Condition 2]

In the electrocatalyst layer 12, an integrated pore volume Vp for all the pores is a first integrated volume ($\Sigma$Vp1). An integrated pore volume Vp for the pores having a pore size D of 50 nm or less is a second integrated volume ($\Sigma$Vp2). In Condition 2, the percentage of the second integrated volume to the first integrated volume ($\Sigma$Vp2 / $\Sigma$Vp1 $\times$ 100) is in the range of 25% or more and 45% or less. It should be noted that each integrated volume can be calculated by integrating values of the pore volume Vp, in the range of the pore size D corresponding to the integrated volume.

[Condition 3]

In the electrocatalyst layer 12, the integrated pore volume Vp for the pores having a pore size D of 90 nm or more is a third integrated volume ($\Sigma$Vp3). In Condition 3, the percentage of the third integrated volume to the first integrated volume ($\Sigma$Vp3 / $\Sigma$Vp1 $\times$ 100) is in the range of 15% or more and 35% or less. It should be noted that the third integrated volume can be calculated by integrating values of the pore volume Vp for the pores having a pore size D of 90 nm or more.

As in the case where Condition 3 is satisfied, if the pores of the electrocatalyst layer 12 include pores having a relatively large size in the above range, the three-phase interface can be maintained in the electrocatalyst layer 12, and gas diffusion and drainage of the produced water can be enhanced in the electrocatalyst layer 12. Furthermore, as in the case where Condition 2 is satisfied, if the pores of the electrocatalyst layer 12 include pores having a relatively small size in the above range, the three-phase interface can be maintained in the electrocatalyst layer 12, and gas diffusion and drainage of the produced water can be enhanced in the electrocatalyst layer 12.

The electrocatalyst layer 12 is preferred to have a thickness in the range of 5 $\mu$m or more and 30 $\mu$m or less. If the thickness of the electrocatalyst layer 12 is 30 $\mu$m or less, the occurrence of cracking can be minimized in the electrocatalyst layer 12. Also, if the electrocatalyst layer 12 is used in a polymer electrolyte fuel cell, deterioration in diffusion of the gas or produced water and in electrical conductivity may be minimized, and further, deterioration in output of the polymer electrolyte fuel cell may be minimized. If the thickness of the electrocatalyst layer 12 is 5 $\mu$m or more, the thickness of the electrocatalyst layer 12 may be less likely to vary, and the catalytic material 21 or the polyelectrolyte 23 may be prevented from being non-uniformly distributed in the electrocatalyst layer 12. It should be noted that cracking on the surfaces of the electrocatalyst layer 12 or uneven thickness of the electrocatalyst layer 12 is unfavorable because they are very likely to adversely affect durability of the polymer electrolyte fuel cell if the electrocatalyst layer 12 is used as part thereof and when the polymer electrolyte fuel cell is operated (used) for a long period of time.

The thickness of the electrocatalyst layer 12 can be measured, for example, through observation of a cross section of the electrocatalyst layer 12 using a scanning electron microscope (SEM). A cross section of the electrocatalyst layer 12 can be exposed, for example, using an ion milling method or using an ultramicrotome. When exposing a cross section of the electrocatalyst layer 12, the electrocatalyst layer 12 is preferred to be cooled. This can reduce damage to the polyelectrolyte 23 contained in the electrocatalyst layer 12.

[Configuration of polymer electrolyte fuel cell]

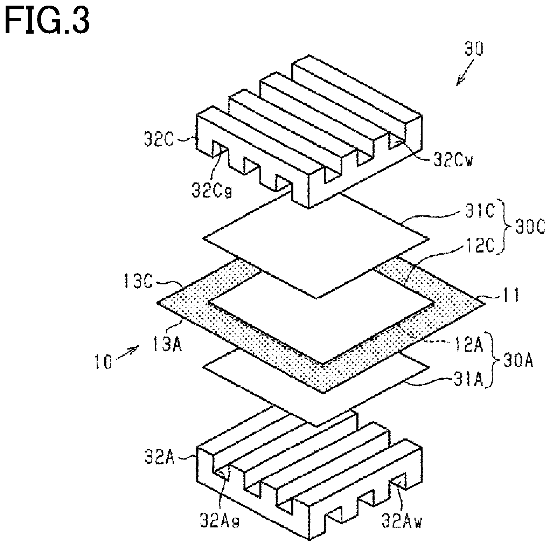

Referring to Fig. 3, a configuration of a polymer electrolyte fuel cell including the membrane electrode assembly 10 will be described. The configuration described below is only an example of a polymer electrolyte fuel cell. Fig. 3 shows a configuration of a single cell unit included in a polymer electrolyte fuel cell. The polymer electrolyte fuel cell may include a plurality of single cell units, and these single cell units may be laminated together.

As shown in Fig. 3, a polymer electrolyte fuel cell 30 includes a membrane electrode assembly 10, two gas diffusion layers, and two separators. The two gas diffusion layers are an oxygen electrode-side gas diffusion layer 31C and a fuel electrode-side gas diffusion layer 31A. The two separators are an oxygen electrode-side separator 32C and a fuel electrode-side separator 32A.

The oxygen electrode-side gas diffusion layer 31C is in contact with an oxygen electrode-side electrocatalyst layer 12C. The oxygen electrode-side electrocatalyst layer 12C and the oxygen electrode-side gas diffusion layer 31C form an oxygen electrode (cathode) 30C. The fuel electrode-side gas diffusion layer 31A is in contact with a fuel electrode-side electrocatalyst layer 12A. The fuel electrode-side electrocatalyst layer 12A and the fuel electrode-side gas diffusion layer 31A form a fuel electrode (anode) 30A.

Of the surfaces of a polyelectrolyte membrane 11, the surface to which the oxygen electrode-side electrocatalyst layer 12C is bonded is an oxygen electrode surface, and the surface to which the fuel electrode-side electrocatalyst layer 12A is bonded is a fuel electrode surface. Of the oxygen electrode surface, the portion that is not covered with the oxygen electrode-side electrocatalyst layer 12C is a peripheral portion. The peripheral portion is provided thereon with an oxygen electrode-side gasket 13C. Of the fuel electrode surface, the portion that is not covered with the fuel electrode-side electrocatalyst layer 12A is a peripheral portion. The peripheral portion is provided thereon with a fuel electrode-side gasket 13A. The gaskets 13C and 13A minimize leakage of gas from the peripheral portions of the respective surfaces.

The oxygen electrode-side separator 32C and the fuel electrode-side separator 32A sandwich a multilayer body formed of the membrane electrode assembly 10 and the two gas diffusion layers 31C and 31A in the thickness direction of the polymer electrolyte fuel cell 30. The oxygen electrode-side separator 32C faces the oxygen electrode-side gas diffusion layer 31C. The fuel electrode-side separator 32A faces the fuel electrode-side gas diffusion layer 31A.

The two surfaces of the oxygen electrode-side separator 32C facing away from each other include multiple respective grooves. Of the two surfaces, the surface facing the oxygen electrode-side gas diffusion layer 31C has grooves serving as gas flow channels 32Cg. Of the two surfaces, the surface facing away from the surface provided with the gas flow channels 32Cg has grooves serving as cooling water flow channels 32Cw.

The two surfaces of the fuel electrode-side separator 32A facing away from each other each include respective multiple grooves. Of the two surfaces, the surface facing the fuel electrode-side gas diffusion layer 31A has grooves serving as gas flow channels 32Ag. Of the two surfaces, the surface facing away from the surface provided with the gas flow channels 32Ag has grooves serving as cooling water flow channels 32Aw.

The separators 32C and 32A are made of an electrically conductive material having impermeability to gases.

In the polymer electrolyte fuel cell 30, an oxidant is supplied to the oxygen electrode 30C through the gas flow channels 32Cg of the oxygen electrode-side separator 32C. Also, in the polymer electrolyte fuel cell 30, fuel is supplied to the fuel electrode 30A through the gas flow channels 32Ag of the fuel electrode-side separator 32A. Thus, the polymer electrolyte fuel cell 30 generates electrical power. It should be noted that the oxidant may be, for example, air, oxygen, or the like. The fuel may be, for example, a hydrogen-containing fuel gas, an organic fuel, or the like.

In the polymer electrolyte fuel cell 30, a reaction expressed by the following Reaction Formula (1) occurs at the fuel electrode 30A. Also, a reaction expressed by the following Reaction Formula (2) occurs at the oxygen electrode 30C.

$$H_2 \rightarrow 2H^+ + 2e^- \text{ ..} \qquad \text{Reaction Formula (1)}$$

$$1/2O_2 + 2H^+ + 2e^- \rightarrow H_2O \text{ ..} \qquad \text{Reaction Formula (2)}$$

In this way, the polymer electrolyte fuel cell 30 of the present embodiment is a fuel cell which produces water at the oxygen electrode 30C with the oxygen-containing gas being supplied to the oxygen electrode 30C.

As described above, the electrocatalyst layer 12 of the present embodiment can be applied to the fuel electrode-side electrocatalyst layer 12A, or can be applied to the oxygen electrode-side electrocatalyst layer 12C. As indicated in the above Reaction Formula (2), water is produced from oxygen, protons, and electrons at the oxygen electrode 30C. If the water produced at the oxygen electrode 30C is not drained from the oxygen electrode 30C, the water may prevent supply of the oxygen-containing gas to the oxygen electrode 30C. This may impair power generation performance of the polymer electrolyte fuel cell 30. In this regard, the electrocatalyst layer 12 of the present embodiment has high drainage performance by satisfying the conditions described above. Therefore, application of such an electrocatalyst layer 12 to the oxygen electrode-side electrocatalyst layer 12C of the oxygen electrode 30C can achieve an improved effect of enhancing power generation performance of the polymer electrolyte fuel cell 30.

[Method of producing membrane electrode assembly]

A method of producing the above membrane electrode assembly will be described.

When producing a membrane electrode assembly 10, the catalytic material 21, the electrically conductive carrier 22, the polyelectrolyte 23, and the fibrous material 24 are mixed in a dispersion medium to prepare a mixture, and then the mixture is subjected to dispersion processing to prepare a catalyst ink. It should be noted that the fibrous material 24 may be omitted from the materials of the catalyst ink. In other words, the fibrous material 24 does not need to be contained in the catalyst ink. The dispersion processing may be performed using a planetary ball mill, a bead mill, an ultrasonic homogenizer, or the like.

The dispersion medium of the catalyst ink may be a solvent that does not erode the catalytic material 21, the electrically conductive carrier 22, the polyelectrolyte 23, and the fibrous material 24, and can dissolve the polyelectrolyte 23 in a state where the dispersion medium is highly fluid or can disperse the polyelectrolyte 23 in the form of a fine gel. The dispersion medium may contain water, which is compatible with the polyelectrolyte 23. The catalyst ink is preferred to contain a volatile liquid organic solvent. If the solvent is a lower alcohol, there is a risk of ignition, and therefore, it is preferred that water be mixed with such a solvent. The solvent can be mixed with water in an amount that does not cause white turbidity or gelation of the catalyst ink due to separation of the polyelectrolyte 23.

The prepared catalyst ink is applied to a substrate and then dried to remove the solvent from the coating film of the catalyst ink. Thus, an electrocatalyst layer 12 is formed on the substrate. The substrate may be a polyelectrolyte membrane 11 or a transfer substrate. If a polyelectrolyte membrane 11 is used as the substrate, for example, the method used may be one in which an electrocatalyst layer 12 is formed by applying the catalyst ink directly on a surface of the polyelectrolyte membrane 11 and then removing the solvent from the coating film of the catalyst ink.

If a transfer substrate is used, a substrate having a catalytic layer may be prepared by applying the catalyst ink on the transfer substrate and then drying the catalyst ink. Subsequently, for example, the substrate having a catalytic layer may be brought into contact with and pressed against the polyelectrolyte membrane 11 via the surface of the electrocatalyst layer 12 while being heated to bond the electrocatalyst layer 12 and the polyelectrolyte membrane 11 together. Electrocatalyst layers 12 may be respectively bonded to opposing surfaces of the polyelectrolyte membrane 11 to prepare a membrane electrode assembly 10.

Various coating methods can be used when applying the catalyst ink to the substrate. Examples of the coating methods may include die coating, roll coating, curtain coating, and spray coating, and a method using a squeegee.

Die coating is preferred to be used as a coating method. Die coating is preferred because the coating thickness is stable in the middle of the coating period and the catalytic ink can be intermittently applied. The method of drying the coating film of the catalyst ink may be, for example, drying using a hot air oven, IR (infrared) rays, a hot plate, a vacuum, or the like. The drying temperature is preferred to be in the range of 40°C or more and 200°C or less, and more preferred to be in the range of 40°C or more and 120°C or less. The drying time is preferred to be in the range of 0.5 minutes or more and 1 hour or less, and more preferred to be in the range of 1 minute or more and 30 minutes or less.

If the electrocatalyst layer 12 is formed on a transfer substrate, the pressure applied to the electrocatalyst layer 12 during the transfer thereof and the temperature may affect power generation performance of the membrane electrode assembly 10. In order to obtain a membrane electrode assembly having high power generation performance, the pressure applied to the multilayer body is preferred to be in the range of 0.1 MPa or more and 20 MPa or less. If the pressure is 20 MPa or less, the electrocatalyst layer 12 can be prevented from being excessively pressed. If the pressure is 0.1 MPa or more, power generation performance may be prevented from being impaired, which would otherwise have been impaired due to deterioration in bonding between the electrocatalyst layer 12 and the polyelectrolyte membrane 11. The temperature at the time of bonding is preferred to be in the vicinity of the glass transition point of the polyelectrolyte membrane 11 or of the polyelectrolyte 23 contained in the electrocatalyst layer 12, from the perspectives of enhancing bonding at the interface between the polyelectrolyte membrane 11 and the electrocatalyst layer 12 and minimizing interfacial resistance.

The transfer substrate may be, for example, a polymer film, or a sheet made of a fluororesin. Fluororesins have good transferability. Examples of the fluororesins may include an ethylene-tetrafluoroethylene copolymer (ETFE), tetrafluoroethylene-hexafluoropropylene copolymer (FEP), tetrafluoroperfluoroalkyl-vinyl ether copolymer (PFA), and polytetrafluoroethylene (PTFE). Examples of the polymers forming the polymer film may include polyimides, polyethylene terephthalate, polyamides (nylon (trademark)), polysulfones, polyethersulfones, polyphenylene sulfides, polyetheretherketones, polyetherimides, polyarylates, and polyethylene naphthalates. A gas diffusion layer may also be used as the transfer substrate.

The size and distribution of the pores of the electrocatalyst layers 12 can be controlled by controlling the temperature of heating the coating film of the catalyst ink, the rate of heating the coating film, the pressing conditions under which the catalyst ink is dried, the mixing ratio of the fibrous material 24, the solvent composition of the catalyst ink, the dispersion strength when preparing the catalyst ink, and the like. For example, as the mixing ratio of the fibrous material 24 increases, the pore size D corresponding to the peak of the distribution curve increases, the ratio of the second integrated volume to the first integrated volume decreases, and the ratio of the third integrated volume to the first integrated volume increases.

The catalytic material 21 may be, for example, metals of the platinum group, and metals other than the platinum group, or alloys, oxides, complex oxides, or carbides of these metals, or the like.

The metals of the platinum group are platinum, palladium, ruthenium, iridium, rhodium, and osmium. As the metals other than the platinum group, iron, lead, copper, chromium, cobalt, nickel, manganese, vanadium, molybdenum, gallium, aluminum, and the like may be used.

As the electrically conductive carrier 22, a carrier that is electrically conductive and able to support the catalytic material 21 without being eroded by the catalytic material 21 may be used. The electrically conductive carrier 22 may be carbon particles. As the carbon particles, for example, carbon black, graphite, black lead, activated carbon, carbon nanotubes, carbon nanofibers, or fullerene may be used. The size of the carbon particles (average primary particle size) is preferred to be in the range of 10 nm or more and 1,000 nm or less, and more preferred to be in the range of 10 nm or more and 100 nm or less. If the particle size is 10 nm or more, the carbon particles are less likely to be excessively dense in the electrocatalyst layer 12, and thereby gas diffusion in the electrocatalyst layer 12 is less likely to be impaired. If the particle size is 1,000 nm or less, cracking is less likely to occur in the electrocatalyst layer 12.

The polyelectrolyte contained in the polyelectrolyte membrane 11 and the electrocatalyst layers 12 may be a proton-conducting electrolyte. The polyelectrolyte may be, for example, a fluorinated polyelectrolyte or a hydrocarbon polyelectrolyte. The fluorinated polyelectrolyte may be a polyelectrolyte having a tetrafluoroethylene framework. As an example of the polyelectrolyte having a tetrafluoroethylene framework, Nafion (trademark) manufactured by DuPont can be mentioned. As the hydrocarbon polyelectrolyte, for example, sulfonated polyether ketones, sulfonated polyether sulfones, sulfonated polyether ether sulfones, sulfonated polysulfides, sulfonated polyphenylenes, and the like can be used.

The polyelectrolyte contained in the polyelectrolyte membrane 11 and the polyelectrolyte 23 contained in the electrocatalyst layer 12 may be the same or may be different from each other. However, it is preferred that the polyelectrolyte in the polyelectrolyte membrane 11 and the polyelectrolyte 23 in the electrocatalyst layer 12 be the same or similar to each other, from the perspective of the interfacial resistance at the interface between the polyelectrolyte membrane 11 and the electrocatalyst layer 12, or the dimensional change ratio between the polyelectrolyte membrane 11 and the electrocatalyst layer 12 when the humidity varies.

The fibrous material 24 may be electron-conducting or proton-conducting fibers. The electron-conducting fibers may be carbon fibers, carbon nanotubes, carbon nanohorns, electrically conductive polymer nanofibers, and the like. From the perspective of electrical conductivity and dispersion, it is preferred that carbon nanofibers be used as the fibrous material 24.

Catalytic electron-conducting fibers are more preferred from the perspective of reducing the amount of use of catalyst made of noble metal. If the electrocatalyst layer 12 is used as an electrocatalyst layer forming the oxygen electrode, i.e., as the oxygen electrode-side electrocatalyst layer 12C, the catalytic electron-conducting fibers may be a carbon alloy catalyst prepared from carbon nanofibers. The electron-conducting fibers having catalytic activity may be fibers formed of an electrode active material used for a fuel electrode. The electrode active material may be a material containing at least one transition metal element selected from the group consisting of Ta, Nb, Ti, and Zr. The material containing a transition metal element may be a partial oxide of a carbonitride of a transition metal element, or an electrically conductive oxide of a transition metal element, or an electrically conductive oxynitride of a transition metal element.

The proton-conducting fibers may need to be fibers formed from a proton-conducting polyelectrolyte. The material for forming the proton-conducting fibers may be a fluorinated polyelectrolyte, a hydrocarbon polyelectrolyte, or the like. The fluorinated polyelectrolyte may be, for example, Nafion (trademark) manufactured by DuPont, Flemion (trademark) manufactured by Asahi Glass Co., Ltd, Aciplex (trademark) manufactured by Asahi Glass Co., Ltd, Gore Select (trademark) manufactured by Gore, or the like. Hydrocarbon polyelectrolytes that are used may be sulfonated polyether ketones, sulfonated polyether sulfones, sulfonated polyether ether sulfones, sulfonated polysulfides, sulfonated polyphenylenes, sulfonated polyimides, or electrolytes such as acid-doped polybenzoxazoles.

For the fibrous material 24, types of the above-mentioned fibers may be used singly or in combination of two or more. The fibrous material 24 may be a combination of a type of electron-conducting fibers and a type of proton-conducting fibers. Of the fibers mentioned above, the fibrous material 24 is preferred to contain at least one selected from the group consisting of carbon nanofibers, carbon nanotubes, and electrolyte fibers.

The fibrous material 24 is preferred to have a fiber diameter in the range of 0.5 nm or more and 500 nm or less, and more preferred to be in the range of 5 nm or more and 200 nm or less. If the fiber diameter is set to the range of 0.5 nm or more and 500 nm or less, voids in the electrocatalyst layer 12 can be increased, and further, the output of the polymer electrolyte fuel cell 30 can be increased. The fibrous material 24 is preferred to have a fiber length in the range of 1 $\mu$m or more and 50 $\mu$m or less, and more preferred to be in the range of 1 $\mu$m or more and 20 $\mu$m or less. If the fiber length is set to the range of 1 $\mu$m or more and 50 $\mu$m or less, the strength of the electrocatalyst layer 12 can be enhanced, and further, the occurrence of cracking is minimized in the electrocatalyst layer 12 when it is formed. In addition, voids in the electrocatalyst layer 12 can be increased, and further, the output of the polymer electrolyte fuel cell 30 can be enhanced.

The mass of the catalytic material 21 in the electrocatalyst layer 12 can be obtained from the amount of coating or the dry mass of a catalyst layer-forming slurry. Furthermore, the mass can be calculated using atomic absorption analysis (AAS), inductively coupled plasma atomic emission spectrometry (ICP-AES), or the like.

[Advantageous effects of first embodiment]

As described above, in the membrane electrode assembly 10 of the present embodiment, when pores are defined to be those voids which have a diameter in the range of 3 nm or more and 5.5 $\mu$m or less among the voids contained in the electrocatalyst layer 12 configured by the fuel electrode-side electrocatalyst layer 12A and the oxygen electrode-side electrocatalyst layer 12C, and when the pore diameter calculated from a pore volume using mercury intrusion porosimetry is defined to be a pore size D, and further, when an integrated pore volume Vp for all the pores is defined to be a first integrated volume ($\Sigma$Vp1), and an integrated pore volume Vp for pores having a pore size D of 50 nm or less is defined to be a second integrated volume ($\Sigma$Vp2), the percentage of the second integrated volume ($\Sigma$Vp2) to the first integrated volume ($\Sigma$Vp1) may be in the range of 25% or more and 55% or less, and more preferably in the range of 25% or more and 45% or less.

Furthermore, in the membrane electrode assembly 10, when pores are defined to be those voids which have a diameter in the range of 3 nm or more and 5.5 $\mu$m or less among the voids contained in the electrocatalyst layer 12 configured by the fuel electrode-side electrocatalyst layer 12A and the oxygen electrode-side electrocatalyst layer 12C, and when the pore diameter calculated from a pore volume using mercury intrusion porosimetry is defined to be a pore size D, and further, when an integrated pore volume Vp for all the pores is defined to be a first integrated volume ($\Sigma$Vp1), and an integrated pore volume Vp for pores having a pore size D of 90 nm or less is defined to be a third integrated volume ($\Sigma$Vp3), the percentage of the third integrated volume ($\Sigma$Vp3) to the first integrated volume ($\Sigma$Vp1) may be in the range of 10% or more and 35% or less, and more preferably in the range of 15% or more and 35% or less.

With the above configuration, the three-phase interface can be maintained while gas diffusion and drainage of the produced water can be enhanced, whereby power generation performance can be enhanced.

Furthermore, in the membrane electrode assembly 10, the percentage of an integrated volume V, which is an integrated pore volume Vp for all the pores, to a volume Vo of the electrocatalyst layer 12, as will be described later, may be in the range of 65% or more and 90% or less. With the above configuration, the electrocatalyst layer 12 can have more sufficient gas diffusion and drainage.

Furthermore, in the membrane electrode assembly 10, the fibrous material 24 may contain one or more types of fibrous materials selected from electron-conducting fibers and proton-conducting fibers, and the electron-conducting fibers may include at least one type of fibers selected from the group consisting of carbon nanofibers, carbon nanotubes, and transition metal-containing fibers.

Furthermore, in the membrane electrode assembly 10, when the fibrous material 24 contained in the fuel electrode-side electrocatalyst layer 12A is defined to be a first fibrous material, and the fibrous material 24 contained in the oxygen electrode-side electrocatalyst layer 12C is defined to be a second fibrous material, the mass of the first fibrous material per unit volume of the fuel electrode-side electrocatalyst layer 12A may be larger than the mass of the second fibrous material per unit volume of the oxygen electrode-side electrocatalyst layer 12C.

With this configuration, since the mass of the fibrous material 24 per unit volume of the fuel electrode-side electrocatalyst layer 12A is larger than the mass of the second fibrous material per unit volume of the oxygen electrode-side electrocatalyst layer 12C, the fuel electrode-side electrocatalyst layer 12A is more likely to contain pores having a larger pore size D than in the oxygen electrode-side electrocatalyst layer 12C. In this way, the fuel gas may more efficiently flow into the membrane electrode assembly 10.

Also, in the membrane electrode assembly 10, the oxygen electrode-side electrocatalyst layer 12C may have a thickness in the range of 5 $\mu$m or more and 30 $\mu$m or less.

Furthermore, in the membrane electrode assembly 10, the fuel electrode-side electrocatalyst layer 12A may have a thickness in the range of 5 $\mu$m or more and 20 $\mu$m or less.

With the above configurations, if the electrocatalyst layer 12 has a thickness of not more than the upper limit, the occurrence of cracking may be minimized in the electrocatalyst layer 12. Also, when the electrocatalyst layer 12 is used in the polymer electrolyte fuel cell 30, deterioration in diffusion of the gas or produced water and in electrical conductivity may be minimized, and further, deterioration in output of the polymer electrolyte fuel cell 30 may be minimized. Furthermore, if the electrocatalyst layer 12 has a thickness of not less than the lower limit, the thickness of the electrocatalyst layer 12 is less likely to vary, and non-uniform distribution of the catalytic material 21 or the polyelectrolyte 23 contained in the electrocatalyst layer 12 can be minimized.

In addition, as described above, the polymer electrolyte fuel cell 30 of the present embodiment is provided with the membrane electrode assembly 10.

With the above configurations, sufficient pores (spaces) can be secured around the catalytic material 21. In this way, the three-phase interface can be maintained in the electrocatalyst layers 12, and gas diffusion and drainage of the produced water can be enhanced in the electrocatalyst layers 12.

[Examples]

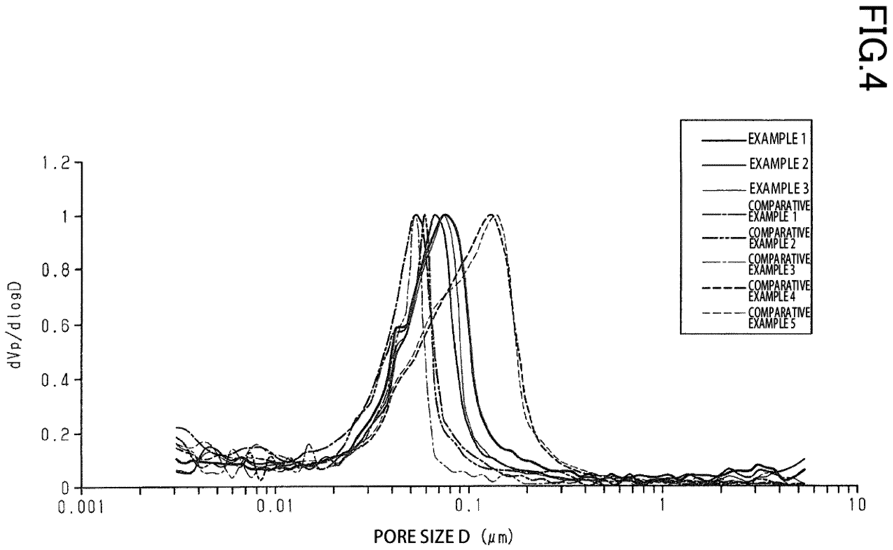

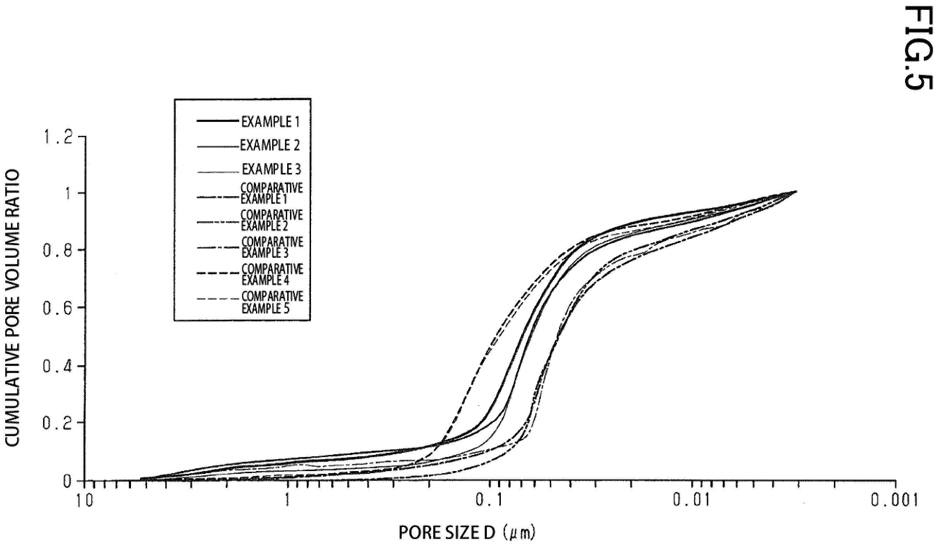

Referring to Figs. 4 and 5, examples of the membrane electrode assembly will be described.

[Example 1]

A mixture was obtained by mixing a platinum-on-carbon catalyst (TEC10E30E manufactured by Tanaka Kikinzoku Kogyo Co., Ltd.), water, 1-propanol, polyelectrolyte (Nafion (trademark) dispersion manufactured by Wako Pure Chemical Industries, Ltd.), and carbon nanofibers (VGCF (trademark)-H manufactured by Showa Denko K.K.). It should be noted that, in the platinum-on-carbon catalyst, a platinum catalyst is supported on carbon particles. The ratio between the mass of the carbon particles and the mass of the polyelectrolyte was set to 1:1. The mixture was then subjected to dispersion processing using a planetary ball mill at 300 rpm for 60 minutes. In this case, zirconia balls having a diameter of 5 mm were added to about one third of the zirconia container. Thus, a fuel electrode catalyst ink was prepared. The fuel electrode catalyst ink was prepared so that the mass of the polyelectrolyte was 100 mass% with respect to the mass of the carbon particles, the mass of the fibrous material was 100 mass% with respect to the mass of the carbon particles, the proportion of water in the dispersion medium was 50 mass%, and the solid content of the catalyst ink was 10 mass%.

Furthermore, a mixture was obtained by mixing a platinum-on-carbon catalyst (TEC10E50E manufactured by Tanaka Kikinzoku Kogyo Co., Ltd.), water, 1-propanol, polyelectrolyte (Nafion (trademark) dispersion manufactured by Wako Pure Chemical Industries, Ltd.), and carbon nanofibers (VGCF (trademark)-H manufactured by Showa Denko K.K.). It should be noted that, in the platinum-on-carbon catalyst, a platinum catalyst is supported on carbon particles. The ratio between the mass of the carbon particles and the mass of the polyelectrolyte was set to 1:1. The mixture was then subjected to dispersion processing using a planetary ball mill at 300 rpm for 60 minutes. In this case, zirconia balls having a diameter of 5 mm were added to about one third of the zirconia container. Thus, an oxygen electrode catalyst ink was prepared. The oxygen electrode catalyst ink was prepared so that the mass of the polyelectrolyte was 100 mass% with respect to the mass of the carbon particles, the mass of the fibrous material was 100 mass% with respect to the mass of the carbon particles, the proportion of water in the dispersion medium was 50 mass%, and the solid content of the catalyst ink was 10 mass%.

The catalyst inks were applied to respective surfaces of a polyelectrolyte membrane (Nafion (trademark) 211 manufactured by Dupont) using a slit die coater to form coating films. It should be noted that the catalyst inks were applied to the polyelectrolyte membrane such that a coating film of the oxygen electrode catalyst ink was formed with a thickness of 150 $\mu$m on a cathode surface thereof, and a coating film of the fuel electrode catalyst ink was formed with a thickness of 100 $\mu$m on an anode surface thereof. Next, the polyelectrolyte membrane, on which the coating films were formed, was placed in a hot air oven heated to 80°C and dried until the tackiness of the coating films disappeared. In this way, a membrane electrode assembly of Example 1 was obtained.

[Example 2]

A membrane electrode assembly of Example 2 was obtained as in Example 1, except that multiwall carbon nanotubes (diameter: 60 nm to 100 nm manufactured by Tokyo Chemical Industry Co., Ltd.) were used in place of the carbon nanofibers (VGCF (trademark)-H manufactured by Showa Denko K.K.) when preparing the oxygen electrode catalyst ink.

[Example 3]

Catalyst inks were prepared as in Example 1. The catalyst inks were applied to surfaces of PTFE films using a slit die coater to form coating films. The PTFE films were then placed in a hot air oven heated to 80°C and dried until the tackiness of the coating films disappeared. Thus, substrates having catalyst layers were obtained. A substrate having an oxygen electrode-side electrocatalyst layer and a substrate having a fuel electrode-side electrocatalyst layer were prepared. It should be noted that the catalyst inks were applied to a polyelectrolyte membrane such that a coating film of the oxygen electrode catalyst ink was formed with a thickness of 150 $\mu$m on a cathode surface thereof, and a coating film of the fuel electrode catalyst ink was formed with a thickness of 60 $\mu$m on an anode surface thereof. The substrates having respective catalyst layers were placed face-to-face on respective surfaces of the polyelectrolyte membrane (Nafion (trademark) 211 manufactured by Dupont) to form a laminate. The laminate was hot-pressed at 120°C and 5 MPa to bond the two electrocatalyst layers to the polyelectrolyte membrane. Then, the PTFE films were separated from the respective electrocatalyst layers to obtain a membrane electrode assembly of Example 3.

[Example 4]

A membrane electrode assembly of Example 4 was obtained as in Example 1, except that the amount of the carbon nanofibers (VGCF (trademark)-H manufactured by Showa Denko K.K.) was reduced to 1/4 of that of Example 1 when preparing the oxygen electrode catalyst ink.

[Example 5]

A membrane electrode assembly of Example 5 was obtained as in Example 2, except that the amount of the multiwall carbon nanotubes (diameter: 60 nm to 100 nm manufactured by Tokyo Chemical Industry Co., Ltd.) was reduced to 1/2 of that of Example 2 when preparing the oxygen electrode catalyst ink.

[Example 6]

A membrane electrode assembly of Example 6 was obtained as in Example 2, except that the amount of the multiwall carbon nanotubes (diameter: 60 nm to 100 nm manufactured by Tokyo Chemical Industry Co., Ltd.) was reduced to 1/4 of that of Example 2 when preparing the oxygen electrode catalyst ink.

[Comparative Example 1]

A membrane electrode assembly of Comparative Example 1 was obtained as in Example 1, except that the application amount of the oxygen electrode catalyst ink was increased to 3 times of that of Example 1 when forming the oxygen electrode-side electrocatalyst layer.

[Comparative Example 2]

A membrane electrode assembly of Comparative Example 2 was obtained as in Example 1, except that the solid ratio was reduced to 1/2 of that of Example 1 when preparing the oxygen electrode catalyst ink.

[Comparative Example 3]

A membrane electrode assembly of Comparative Example 3 was obtained as in Example 1, except that no carbon nanofibers were added when preparing the oxygen electrode catalyst ink.

[Comparative Example 4]

A membrane electrode assembly of Comparative Example 4 was obtained as in Example 1, except that the amount of the carbon nanofibers was increased to 2 times of that of Example 1 when preparing the oxygen electrode catalyst ink.

[Comparative Example 5]

A membrane electrode assembly of Comparative Example 5 was obtained as in Example 1, except that the amount of the carbon nanofibers was increased to 3 times of that of Example 1 when preparing the oxygen electrode catalyst ink.

[Calculation based on pore volume Vp]

Distribution of the pore volume Vp was measured using mercury intrusion porosimetry. Specifically, the pore volume Vp was measured using an automated porosimeter (Autopore IV9510 manufactured by Micromeritics) for a membrane electrode assembly in which only an oxygen electrode-side electrocatalyst layer was formed on a polyelectrolyte membrane. The measurement cell had a volume of about 5 cm$^3$, and the pressure of mercury intrusion was increased stepwise from 3 kPa to 400 MPa. In this way, the intruded amount of mercury, or the pore volume Vp, at each pressure was obtained. Each pressure of mercury intrusion was converted to a pore size D using Washburn's equation, and the pore volume Vp against the pore size D was plotted as a distribution function dVp/dlogD. The surface tension $\gamma$ was taken to be 0.48 N/m, and the contact angle $\theta$ was taken to be 130°. The pore size D corresponding to the peak of the plot was read out as a pore size Dp.

Then, the volumes of all the pores having a pore size D of 3 nm or more and 5.5 $\mu$m or less were integrated to calculate a first integrated volume. Also, the volumes of the pores having a pore size D of 90 nm or more were integrated to calculate a third integrated volume. Then, the third integrated volume was divided by the first integrated volume, and the quotient was multiplied by 100 to calculate a percentage R(L) of the third integrated volume to the first integrated volume. Furthermore, the volumes of the pores having a pore size D of 50 nm or less were integrated to calculate a second integrated volume. The second integrated volume was divided by the first integrated volume, and the quotient was multiplied by 100 to calculate a percentage R(S) of the second integrated volume to the first integrated volume.

[Calculation of integrated pore volume with respect to geometric volume of oxygen electrode-side electrocatalyst layer]

Next, the volumes of all the pores having a pore size D of 3 nm or more and 5.5 $\mu$m or less were integrated to calculate an integrated pore volume V Also, the area and thickness of the membrane electrode assembly subjected to measurements using the automated porosimeter were multiplied together to calculate a geometric volume of the membrane electrode assembly. Furthermore, the area of the membrane electrode assembly subjected to measurements using the automated porosimeter was multiplied by the thickness of the polyelectrolyte membrane to calculate a volume of the polyelectrolyte membrane. The volume of the polyelectrolyte membrane was subtracted from the volume of the membrane electrode assembly to calculate a geometric volume $V_0$ of the oxygen electrode-side electrocatalyst layer. Then, a percentage of the integrated pore volume V to the geometric volume $V_0$ of the oxygen electrode-side electrocatalyst layer ($V/V_0$) was calculated.

[Measurements of thickness of electrocatalyst layer]

A cross section of the electrocatalyst layer was observed using a scanning electron microscope (SEM) to measure the thickness of the electrocatalyst layer. Specifically, a cross section of the electrocatalyst layer was observed at 1,000 times magnification using a scanning electron microscope (FE-SEM S-4800 manufactured by Hitachi High-Technologies, Ltd.). The thickness of the electrocatalyst layer was measured at 30 observation points of the cross section. The average of the thicknesses at the 30 observation points was taken to be the thickness of the electrocatalyst layer.

[Measurements of power generation performance]

Power generation performance was measured using the method according to a booklet titled "Cell unit evaluation and analysis protocol" and published by the New Energy and Industrial Technology Development Organization (NEDO). A JARI standard cell was used as a single cell unit for evaluation. In the JARI standard cell, a gas diffusion layer, a gasket, and a separator were arranged on each surface of a membrane electrode assembly and pressed against the surface to achieve a predetermined surface pressure. Then, the I-V measurement was performed according to the method described in the booklet "Cell unit evaluation and analysis protocol". These conditions were defined to be standard conditions. Also, the I-V measurement was performed by setting the relative humidities of both of the anode and cathode to RH 100%. These conditions were defined to be high humidity conditions.

[Measurements of durability]

For measuring durability, the same single cell unit as in the measurements of power generation performance was used as a single cell unit for evaluation. Durability was measured by performing the humidity cycle test described in the booklet "Cell unit evaluation and analysis protocol" mentioned above.

[Comparison results]

Table 1 shows results on the following items for the electrocatalyst layers of the membrane electrode assemblies of Examples 1 to 6 and Comparative Examples 1 to 5. Specifically, Table 1 shows the pore size Dp at the peak of the distribution curve of the pore volume Vp, the percentage R(L) (%) of the third integrated volume to the first integrated volume, and the percentage R(S) (%) of the second integrated volume to the first integrated volume in each electrocatalyst layer. Also, Table 1 shows the percentage $V/V_0$ (%) of the first integrated volume V to the volume $V_0$ of the electrocatalyst layer, and the thickness T ($\mu$m) of electrocatalyst layer in each electrocatalyst layer. Furthermore, Table 1 shows measurement results of power generation performance and durability on the polymer electrolyte fuel cells respectively including membrane electrode assemblies of Examples 1 to 6 and Comparative Examples 1 to 5.

For the results of power generation performance under the standard conditions, the single cell units having a current of 25 A or more at a voltage of 0.6 V were evaluated as good, and those of less than 25 A were evaluated as poor. For power generation performance under high humidity conditions, single cell units having a current of 31 A or more at a voltage of 0.6 V were evaluated as good, those of 30 A or more were evaluated as fair, and those of less than 30 A were evaluated as poor. For durability, single cell units having a hydrogen cross leak current of less than 8 times the initial value after the lapse of 8,000 cycles were evaluated as good, those of less than 10 times the initial value were evaluated as fair, and those of 10 times or more the initial value were evaluated as poor.

Fig. 4 shows distribution curves of the pore volume Vp for the electrocatalyst layers of Examples 1 to 3 and Comparative Examples 1 to 5. Fig. 5 shows a graph indicating relationships between cumulative pore volume ratio and pore size D in the electrocatalyst layers of Examples 1 to 3 and Comparative Examples 1 to 5.

[Table 1]

| | Dp ($\mu$m) | R(L) (%) | R(S) (%) | $V/V_0$ (%) | T ($\mu$m) | Power generation performance | | Durability |
| | | | | | | Standard | High humidity | |
|---|---|---|---|---|---|---|---|---|
| Ex. 1 | 0.074 | 33 | 31 | 85 | 15 | Good | Good | Good |
| Ex. 2 | 0.066 | 24 | 35 | 80 | 12 | Good | Good | Good |
| Ex. 3 | 0.074 | 21 | 36 | 74 | 13 | Good | Good | Good |
| Ex. 4 | 0.063 | 14 | 53 | 78 | 12 | Good | Fair | Fair |
| Ex. 5 | 0.058 | 18 | 48 | 65 | 11 | Good | Fair | Good |
| Ex. 6 | 0.055 | 14 | 54 | 60 | 10 | Good | Fair | Fair |
| Co. Ex. 1 | 0.051 | 12 | 55 | 60 | 34 | Good | Poor | Good |
| Co. Ex. 2 | 0.059 | 9 | 56 | 60 | 12 | Good | Poor | Poor |
| Co. Ex. 3 | 0.053 | 12 | 56 | 70 | 11 | Good | Poor | Poor |
| Co. Ex. 4 | 0.126 | 50 | 25 | 60 | 20 | Poor | Good | Good |
| Co. Ex. 5 | 0.138 | 48 | 27 | 65 | 12 | Poor | Poor | Poor |

As shown in Table 1, in all of Examples 1 to 3, the pore size Dp at the peak of the distribution curve of the pore volume Vp was in the range of 0.06 $\mu$m or more and 0.11 $\mu$m or less. In all of Examples 1 to 3, the percentage R(L) of the third integrated volume to the first integrated volume was in the range of 15% or more and 35% or less, and the percentage R(S) of the second integrated volume to the first integrated volume was in the range of 25% or more and 45% or less.

In all of Examples 1 to 3, the thickness T of the electrocatalyst layer was in the range of 5 $\mu$m or more and 30 $\mu$m or less. Furthermore, in all of Examples 1 to 6, power generation performance was evaluated as good or fair and durability was evaluated as good or fair, regardless of the measurement conditions. Specifically, the membrane electrode assemblies of Examples 1 to 6 were capable of forming fuel cells having good power generation performance and good durability.

In contrast, in all of Comparative Examples 1 to 5, the pore size Dp at the peak of the distribution curve of the pore volume Vp was outside the range of 0.06 $\mu$m or more and 0.11 $\mu$m or less. In all of Comparative Examples 1 to 5, the percentage R(L) of the third integrated volume to the first integrated volume was outside the range of 15% or more and 35% or less. In all of Comparative Examples 1 to 5, the percentage R(S) of the second integrated volume to the first integrated volume was outside the range of 25% or more and 45% or less.

In Comparative Example 1, the thickness T of the electrocatalyst layer exceeded 30 $\mu$m, whereas in Comparative Examples 2 to 5, the thickness T of the electrocatalyst layer was in the range of 5 $\mu$m or more and 30 $\mu$m or less.

In Comparative Examples 1 to 5, power generation performance was evaluated as poor under the standard conditions and/or high humidity conditions. In Comparative Examples 2, 3 and 5, durability was also evaluated as poor. Thus, according to Comparative Examples 1 to 5, power generation performance and/or durability were impaired, compared to the examples described above.

As described above, according to the first embodiment of the electrocatalyst layer, the membrane electrode assembly, and the fuel cell, the advantageous effects enumerated below can be achieved.

(1) When the pore size Dp is in the range of 0.06 $\mu$m or more and 0.11 $\mu$m or less in the distribution curve indicating distribution of the pore volume Vp plotted against the pore size D, the electrocatalyst layer 12 contains voids for achieving sufficient gas diffusion and drainage, whereby power generation performance can be enhanced.

(2) When the percentage of the second integrated volume to the first integrated volume is in the range of 25% or more and 45% or less, the three-phase interface can be maintained in the electrocatalyst layer 12, and gas diffusion and drainage of the produced water can be enhanced, whereby power generation performance can be enhanced.

(3) When the percentage of the third integrated volume to the first integrated volume is in the range of 15% or more and 35% or less, the three-phase interface can be maintained, and gas diffusion and drainage of the produced water can be enhanced, whereby power generation performance can be enhanced.

(4) When the percentage of the integrated volume V, which is an integration of the pore volumes of all the pores, to the volume $V_0$ of the electrocatalyst layer is in the range of 65% or more and 90% or less, the electrocatalyst layer can have more sufficient gas diffusion and drainage.

[Second Embodiment]

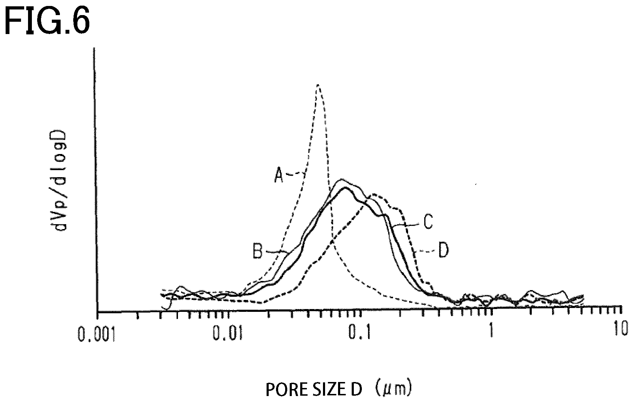

Referring to Fig. 6, a second embodiment of a membrane electrode assembly and a polymer electrolyte fuel cell will be described. The second embodiment is different from the first embodiment in the configuration of the membrane electrode assembly. Therefore, the second embodiment will be described in detail focusing on the differences, omitting explanation in detail of components common to the first embodiment by designating the same reference signs thereto as those of the first embodiment.

[Membrane electrode assembly]

Referring to Fig. 6, the configuration of a membrane electrode assembly 10 will be described. In the present embodiment, the oxygen electrode-side electrocatalyst layer 12C contains a fibrous material 24, but the fuel electrode-side electrocatalyst layer 12A may or may not contain the fibrous material 24. The fuel electrode-side electrocatalyst layer 12A contains a first catalytic material, a first electrically conductive carrier, and a first polyelectrolyte. The oxygen electrode-side electrocatalyst layer 12C contains a second catalytic material, a second electrically conductive carrier, a second polyelectrolyte, and a fibrous material. The first catalytic material may be the same as or different from the second catalytic material. The first electrically conductive carrier may be the same as or different from the second electrically conductive carrier. The first polyelectrolyte may be the same as or different from the second polyelectrolyte.

In the electrocatalyst layer 12, i.e., in each of the fuel electrode-side electrocatalyst layer 12A and the oxygen electrode-side electrocatalyst layer 12C, portions containing none of the catalytic material 21, electrically conductive carrier 22, polyelectrolyte 23, and fibrous material 24 are voids. In the present embodiment, voids having a diameter of 3 nm or more and 5.5 μm or less, are defined to be pores. Specifically, the membrane electrode assembly 10 includes voids, and the voids include pores each having a diameter in the range of 3 nm or more and 5.5 μm or less.

In the present embodiment, the method and the like of calculating a pore volume Vp for pores with a pore size D is the same as that used for calculating a pore volume Vp for pores with a pore size D described in the first embodiment.

Specifically, in the membrane electrode assembly 10, the pore volume Vp for pores with a pore size D measured using mercury intrusion porosimetry is calculated. It should be noted that the pore size D is defined to be a size D of a cylindrical model pore acquired using mercury intrusion porosimetry.

Description will now be given of distribution of the pore volume Vp mentioned above. Distribution of the pore volume Vp is expressed as a distribution function of the pore volume Vp with respect to the pore size D (3 nm≤D≤5.5 μm) (=dVp/dlogD) (log differential pore volume distribution). Distribution of the pore volume Vp is obtained using mercury intrusion porosimetry. The pore volume Vp corresponds to the sum of the volumes of the pores having a specific pore size D among the pores.

Since mercury has a high surface tension, a predetermined pressure P is required to be applied thereto for penetration into pores. Distribution of the pore volume Vp or a specific surface area can be calculated from the pressure P applied to the mercury for penetration into the pores, and the amount of mercury intruded into the pores. The relationship between the applied pressure P and the pore size D allowing mercury to penetrate the pores with the pressure P can be expressed by Formula (1) which is known as Washburn's equation. In Formula (1) below, $\gamma$ is the surface tension of mercury, and $\theta$ is the contact angle between mercury and a pore wall surface. In the present embodiment, a pore size D is calculated assuming the surface tension $\gamma$ to be 0.48 N/m and the contact angle $\theta$ to be 130∘..

$$D = -4\gamma\cos\theta/P \quad ... (1)$$

It should be noted that, in actual measurements using mercury intrusion porosimetry, the volume of intruded mercury is recorded every time a different pressure P is applied. Each pressure P is converted to a pore size D based on Formula (1). Assuming that the volume of the intruded mercury is equal to the pore volume Vp, a pore volume increase dV is plotted against the pore size D. The pore volume increase dV in this case is an increase of the pore volume Vp when the pore size has increased from D to D+dD. The peak of the plot is the peak of the distribution of the pore volume Vp.

Functions required for enhancing power generation performance in the membrane electrode assembly 10 are, for example, maintaining the three-phase interface in the electrocatalyst layer 12 included in the membrane electrode assembly 10, diffusing gas in the electrocatalyst layer 12, and draining water produced in the electrocatalyst layer 12. In order to enhance the above functions, sufficient voids are required in the electrocatalyst layer 12 and the required amount of the voids is determined with respect to the amount of the catalytic material in the electrocatalyst layer 12, i.e., the mass of the catalytic material contained in the electrocatalyst layer 12, not with respect to the volume of the electrocatalyst layer 12. Furthermore, the pore size D suitable for maintaining the three-phase interface, the pore size D suitable for diffusing gas, and the pore size D suitable for draining produced water are different from each other. The pore size D suitable for maintaining the three-phase interface, the pore size D suitable for diffusing gas, and the pore size D suitable for draining produced water do not have to be necessarily the same, but may include ranges different from each other. The pore size D suitable for gas diffusion may also be different between the oxygen electrode- and fuel electrode-side electrocatalyst layers 12C and 12A. The pore size D suitable for enhancing power generation performance is required to satisfy these pore sizes D. The three-phase interface refers to an interface formed by the polyelectrolyte, the catalyst and the gas.

The membrane electrode assembly 10, specifically, at least either of the fuel electrode- and oxygen electrode-side electrocatalyst layers 12A and 12C, needs to satisfy at least one of the following Conditions 4 to 7. More preferably, both of the fuel electrode- and oxygen electrode-side electrocatalyst layers 12A and 12C need to satisfy the following Condition 7, and at least either of the fuel electrode- and oxygen electrode-side electrocatalyst layers 12A and 12C needs to satisfy at least one of the following Conditions 4 to 6.

[Condition 4]

The pore size D at the peak of the distribution curve indicating distribution of the pore volume Vp plotted against the pore size D is in the range of 0.06 $\mu$m or more and 0.11 $\mu$m or less (0.06 $\mu$m $\leq$ D $\leq$ 0.11 $\mu$m). If the pore size D at the peak of the distribution curve is in the range of 0.06 $\mu$m or more and 0.11 $\mu$m or less, the electrocatalyst layer 12 can contain voids for achieving sufficient gas diffusion and drainage.

Fig. 6 shows an example of distribution curves each indicating distribution of the pore volume Vp plotted against the pore size D.

As shown in Fig. 6, the pore sizes D at the peaks of the distribution curves B and C are in the range of 0.06 $\mu$m or more and 0.11 $\mu$m or less. In contrast, the pore sizes D at the peaks of the distribution curves A and D are outside the range of 0.06 $\mu$m or more and 0.11 $\mu$m or less. More specifically, the pore size D at the peak of the distribution curve A is less than 0.06 $\mu$m. In contrast, the pore size D at the peak of the distribution curve D is more than 0.11 $\mu$m.

[Condition 5]

In the membrane electrode assembly 10, the integrated pore volume Vp for the pores having a pore size D of the entire range is a first integrated volume ($\Sigma$Vp1). The integrated pore volume Vp for the pores having a pore size D of 50 nm or less is a second integrated volume ($\Sigma$Vp2). In Condition 5, the percentage of the second integrated volume to the first integrated volume ($\Sigma$Vp2 / $\Sigma$Vp1 $\times$ 100) is in the range of 25% or more and 45% or less.

[Condition 6]

In the membrane electrode assembly 10, the integrated pore volume Vp for the pores having a pore size D of 100 nm or more is a third integrated volume ($\Sigma$Vp3). In Condition 6, the percentage of the third integrated volume to the first integrated volume ($\Sigma$Vp3 / $\Sigma$Vp1 $\times$ 100) is in the range of 30% or more and 50% or less.

As in the case where Condition 6 is satisfied, if the pores of the membrane electrode assembly 10 include pores having a relatively large size in the above range, the three-phase interface can be maintained in the electrocatalyst layer 12 of the membrane electrode assembly 10, and gas diffusion and drainage of the produced water can be enhanced in the electrocatalyst layer 12. Furthermore, as in the case where Condition 5 is satisfied, if the pores of the electrocatalyst layer 12 include pores having a relatively small size in the above range, the three-phase interface can be maintained in the electrocatalyst layer 12, and gas diffusion and drainage of the produced water can be enhanced in the electrocatalyst layer 12.

[Condition 7]

In the membrane electrode assembly 10, the integrated pore volume Vp for the pores having a pore size D of the entire range is a first integrated volume ($\Sigma$Vp1). In Condition 7, the first integrated volume with respect to a mass M of the catalytic material, i.e., the mass of the catalytic material contained in the electrocatalyst layer 12 ($\Sigma$Vp1/M), is in the range of 2.8 or more and 4.5 or less.

If the oxygen electrode- and fuel-electrode-side electrocatalyst layers 12C and 12A both contain the fibrous material 24, the mass of the fibrous material (first fibrous material) 24 per unit volume of the fuel electrode-side electrocatalyst layer 12A is preferred to be greater than the mass of the fibrous material (second fibrous material) 24 per unit volume of the oxygen electrode-side electrocatalyst layer 12C. If the mass of the fibrous material 24 per unit volume of the fuel electrode-side electrocatalyst layer 12A is larger than the mass of the fibrous material 24 per unit volume of the oxygen electrode-side electrocatalyst layer 12C, the fuel electrode-side electrocatalyst layer 12A is more likely to contain pores having a larger pore size D than in the oxygen electrode-side electrocatalyst layer 12C. In this way, the fuel gas may more efficiently flow into the membrane electrode assembly 10. It should be noted that the fibrous material 24 may be the same or may be different between the oxygen electrode- and fuel-electrode-side electrocatalyst layers 12C and 12A

By observing a cross section of the membrane electrode assembly 10 using a scanning electron microscope (SEM), the content of the fibrous material 24 can be compared between the oxygen electrode- and fuel-electrode-side electrocatalyst layers 12C and 12A. Specifically, a cross section of the membrane electrode assembly 10 may be observed at 1,000 times magnification using a scanning electron microscope (FE-SEM S-4800 manufactured by Hitachi High-Technologies, Ltd.) to randomly extract 30 observation points from each of the cross sections of the oxygen electrode- and fuel-electrode-side electrocatalyst layers 12C and 12A. Then, individual observation points may be randomly extracted from the 30 observation points of the electrocatalyst layers 12 to sequentially compare the extracted observation points between the oxygen electrode- and fuel-electrode-side electrocatalyst layers 12C and 12A. The extracted observation points may be visually observed and the content of the fibrous material 24 may be compared between the oxygen electrode- and fuel-electrode-side electrocatalyst layers 12C and 12A to determine which is larger. Based on observation and comparison at the 30 observation points between the oxygen electrode- and fuel-electrode-side electrocatalyst layers 12C and 12A, the content of the fibrous material 24, as to which is higher or lower, can be determined by majority.

For example, the content of the fibrous material 24 in the fuel electrode-side electrocatalyst layer 12A may be determined to be higher than the content of the fibrous material 24 in the oxygen electrode-side electrocatalyst layer 12C at the majority of observation points. In this case, the mass of the fibrous material 24 per unit volume of the fuel electrode-side electrocatalyst layer 12A can be determined to be greater than the mass of the fibrous material 24 per unit volume of the oxygen electrode-side electrocatalyst layer 12C.

It should be noted that the oxygen electrode-side electrocatalyst layer 12C is preferred to have a thickness in the range of 5 $\mu$m or more and 30 $\mu$m or less. If the oxygen electrode-side electrocatalyst layer 12C has a thickness of 30 $\mu$m or less, the occurrence of cracking may be minimized in the oxygen electrode-side electrocatalyst layer 12C. Also, when the oxygen electrode-side electrocatalyst layer 12C is used in the polymer electrolyte fuel cell 30, deterioration in diffusion of the gas or produced water and in electrical conductivity may be minimized, and further, deterioration in output of the polymer electrolyte fuel cell 30 may be minimized. Furthermore, the oxygen electrode-side electrocatalyst layer 12C, if it has a thickness of 5 $\mu$m or more, may be less likely to suffer thickness variation, and accordingly the catalytic material 21 or the polyelectrolyte 23 contained therein may be prevented from being non-uniformly distributed. It should be noted that cracking on the surface of the oxygen electrode-side electrocatalyst layer 12C or uneven thickness thereof are not preferable because they are very likely to adversely affect durability of the polymer electrolyte fuel cell 30 if the oxygen electrode-side electrocatalyst layer 12C is used as part thereof and if the polymer electrolyte fuel cell 30 is operated (used) for a long period of time.

The fuel electrode-side electrocatalyst layer 12A is preferred to have a thickness in the range of 5 $\mu$m or more and 20 $\mu$m or less. If the fuel electrode-side electrocatalyst layer 12A has a thickness of 20 $\mu$m or less, the occurrence of cracking may be minimized in the fuel electrode-side electrocatalyst layer 12A. Also, when the fuel electrode-side electrocatalyst layer 12A is used in the polymer electrolyte fuel cell 30, deterioration in diffusion of the gas and in electrical conductivity may be minimized, and further, deterioration in output of the polymer electrolyte fuel cell 30 may be minimized. The fuel electrode-side electrocatalyst layer 12A, if it has a thickness of 5 $\mu$m or more, may be less likely to suffer thickness variation, and accordingly the catalytic material 21 or the polyelectrolyte 23 contained therein is prevented from being non-uniformly distributed. It should be noted that cracking on the surface of the fuel electrode-side electrocatalyst layer 12A or uneven thickness thereof are not preferable because they are very likely to adversely affect durability of the polymer electrolyte fuel cell 30 if the fuel electrode-side electrocatalyst layer 12A is used as part thereof and if the polymer electrolyte fuel cell 30 is operated (used) for a long period of time.

The size and distribution of the pores of the electrocatalyst layers 12 can be controlled by controlling the temperature of heating the coating film of the catalyst ink, the rate of heating the coating film, the pressing conditions under which the catalyst ink is dried, the mixing ratio of the fibrous material 24, the mixing ratio of the polyelectrolyte 23, the solvent composition of the catalyst ink, the dispersion strength when preparing the catalyst ink, and the like. For example, as the mixing ratio of the fibrous material 24 increases, the pore size D corresponding to the peak of the distribution curve increases accordingly, and as the mixing ratio of the polyelectrolyte 23 decreases, the pore volume Vp decreases accordingly.

[Advantageous effects of second embodiment]

As described above, in each of the fuel electrode- and oxygen electrode-side electrocatalyst layers 12A and 12C, when the first integrated volume with respect to the mass of the catalytic material is in the range of 2.8 or more and 4.5 or less, the pores can include those pores which have relatively large sizes in the above range, so that the three-phase interface can be maintained in the electrocatalyst layer 12, and gas diffusion and drainage of the produced water can be enhanced in the electrocatalyst layer 12.

Furthermore, in at least one of the fuel electrode- and oxygen electrode-side electrocatalyst layers 12A and 12C of the membrane electrode assembly 10, when pores are defined to be those voids which have a diameter in the range of 3 nm or more and 5.5 $\mu$m or less among the voids contained in the electrocatalyst layer 12 and when the pore diameter calculated from a pore volume using mercury intrusion porosimetry is defined to be a pore size D, and further, when an integrated pore volume Vp for all the pores is defined to be a first integrated volume ($\Sigma$Vp1), and an integrated pore volume Vp for pores having a pore size D of 50 nm or less is defined to be a second integrated volume ($\Sigma$Vp2), the percentage of the second integrated volume ($\Sigma$Vp2) to the first integrated volume ($\Sigma$Vp1) may be in the range of 25% or more and 55% or less, and more preferably in the range of 25% or more and 45% or less.

Furthermore, in at least one of the fuel electrode- and oxygen electrode-side electrocatalyst layers 12A and 12C of the membrane electrode assembly 10, when pores are defined to be those voids which have a diameter in the range of 3 nm or more and 5.5 $\mu$m or less among the voids contained in the electrocatalyst layer 12 and when the pore diameter calculated from a pore volume using mercury intrusion porosimetry is defined to be a pore size D, and further, when an integrated pore volume Vp for all the pores is defined to be a first integrated volume ($\Sigma$Vp1), and an integrated pore volume Vp for pores having a pore size D of 90 nm or more is defined to be a third integrated volume ($\Sigma$Vp3), the percentage of the third integrated volume ($\Sigma$Vp3) to the first integrated volume ($\Sigma$Vp1) may be in the range of 10% or more and 35% or less, and more preferably in the range of 15% or more and 35% or less.

With the above configuration, the three-phase interface can be maintained while gas diffusion and drainage of the produced water can be enhanced, whereby power generation performance can be enhanced.

Furthermore, in the membrane electrode assembly 10, the percentage of the integrated volume V, which is an integrated pore volume Vp for all the pores, to the volume Vo of the electrocatalyst layer 12 may be in the range of 65% or more and 90% or less. With the above configuration, the electrocatalyst layer 12 can have more sufficient gas diffusion and drainage.

Furthermore, in the membrane electrode assembly 10, the fibrous material 24 may contain one or more types of fibrous materials selected from electron-conducting fibers and proton-conducting fibers, and the electron-conducting fibers may include at least one type of fibers selected from the group consisting of carbon nanofibers, carbon nanotubes, and transition metal-containing fibers.

Furthermore, in the membrane electrode assembly 10, when the fibrous material 24 contained in the fuel electrode-side electrocatalyst layer 12A is defined to be a first fibrous material, and the fibrous material 24 contained in the oxygen electrode-side electrocatalyst layer 12C is defined to be a second fibrous material, the mass of the first fibrous material per unit volume of the fuel electrode-side electrocatalyst layer 12A may be larger than the mass of the second fibrous material per unit volume of the oxygen electrode-side electrocatalyst layer 12C.

With this configuration, since the mass of the fibrous material 24 per unit volume of the fuel electrode-side electrocatalyst layer 12A is larger than the mass of the second fibrous material per unit volume of the oxygen electrode-side electrocatalyst layer 12C, the fuel electrode-side electrocatalyst layer 12A is more likely to contain pores having a larger pore size D than in the oxygen electrode-side electrocatalyst layer 12C. In this way, the fuel gas may more efficiently flow into the membrane electrode assembly 10.

Also, in the membrane electrode assembly 10, the oxygen electrode-side electrocatalyst layer 12C may have a thickness in the range of 5 $\mu$m or more and 30 $\mu$m or less.

Furthermore, in the membrane electrode assembly 10, the fuel electrode-side electrocatalyst layer 12A may have a thickness in the range of 5 $\mu$m or more and 20 $\mu$m or less.

With the above configurations, if the electrocatalyst layer 12 has a thickness of not more than the upper limit, the occurrence of cracking may be minimized in the electrocatalyst layer 12. Also, when the electrocatalyst layer 12 is used in the polymer electrolyte fuel cell 30, deterioration in diffusion of the gas or produced water and in electrical conductivity may be minimized, and further, deterioration in output of the polymer electrolyte fuel cell 30 may be minimized. Furthermore, if the electrocatalyst layer 12 has a thickness of not less than the lower limit, the thickness of the electrocatalyst layer 12 is less likely to vary, and non-uniform distribution of the catalytic material 21 or the polyelectrolyte 23 contained in the electrocatalyst layer 12 can be minimized.

In addition, as described above, the polymer electrolyte fuel cell 30 of the present embodiment is provided with the membrane electrode assembly 10.

With the above configurations, sufficient pores (spaces) can be secured around the catalytic material 21. In this way, the three-phase interface can be maintained in the electrocatalyst layers 12, and gas diffusion and drainage of the produced water can be enhanced in the electrocatalyst layers 12.

[Examples]

Referring to Fig. 6 and Table 2, examples of the membrane electrode assembly will be described.

[Example 7]

A mixture was obtained by mixing platinum-on-carbon catalyst (TEC10E50E manufactured by Tanaka Kikinzoku Kogyo Co., Ltd.), water, 1-propanol, polyelectrolyte (Nafion (trademark) dispersion manufactured by Wako Pure Chemical Industries, Ltd.), and carbon nanofibers (VGCF (trademark)-H manufactured by Showa Denko K.K.). It should be noted that, in the platinum-on-carbon catalyst, a platinum catalyst is supported on carbon particles. The mixture was then subjected to dispersion processing using a planetary ball mill at 300 rpm for 30 minutes. In this case, zirconia balls having a diameter of 5 mm were added to about one third of the zirconia container. It should be noted that an oxygen electrode catalyst ink was prepared so that the mass of the polyelectrolyte was 100 mass% with respect to the mass of the carbon particles, the mass of the carbon nanofibers was 100 mass% with respect to the mass of the carbon particles, the proportion of water in the dispersion medium was 50 mass%, and the solid content concentration was 10 mass%.

Furthermore, a mixture was obtained by mixing a platinum-on-carbon catalyst (TEC10E30E manufactured by Tanaka Kikinzoku Kogyo Co., Ltd.), water, 1-propanol, polyelectrolyte (Nafion (trademark) dispersion manufactured by Wako Pure Chemical Industries, Ltd.), and carbon nanofibers (VGCF (trademark)-H manufactured by Showa Denko K.K.). It should be noted that, in the platinum-on-carbon catalyst, a platinum catalyst is supported on carbon particles. The mixture was then subjected to dispersion processing using a planetary ball mill at 300 rpm for 30 minutes. In this case, zirconia balls having a diameter of 5 mm were added to about one third of the zirconia container. It should be noted that a fuel electrode catalyst ink was prepared so that the mass of the polyelectrolyte was 100 mass% with respect to the mass of the carbon particles, the mass of the carbon nanofibers was 100 mass% with respect to the mass of the carbon particles, the proportion of water in the dispersion medium was 50 mass%, and the solid content concentration was 10 mass%.

The oxygen electrode catalyst ink was applied to one surface of a polyelectrolyte membrane (Nafion (trademark) 211 manufactured by Dupont) using a slit die coater to form a coating film having a thickness of 150 $\mu$m. Next, the polyelectrolyte membrane provided with the coating film on one surface was placed in a hot air oven heated to 80°C and dried until the tackiness of the coating film disappeared to form an oxygen electrode-side electrocatalyst layer. Next, the fuel electrode catalyst ink was applied to the other surface of the polyelectrolyte membrane using a slit die coater to form a coating film having a thickness of 100 $\mu$m. Next, the polyelectrolyte membrane provided with the coating film on the other surface was placed in a hot air oven heated to 80°C and dried until the tackiness of the coating film disappeared to form a fuel electrode-side electrocatalyst layer. In this way, a membrane electrode assembly of Example 7 was obtained.

[Example 8]

A membrane electrode assembly of Example 8 was obtained as in Example 7, except that multiwall carbon nanotubes (diameter: 60 nm to 100 nm manufactured by Tokyo Chemical Industry Co., Ltd.) were used in place of the carbon nanofibers (VGCF (trademark)-H manufactured by Showa Denko K.K.) when preparing the oxygen electrode catalyst ink.

[Example 9]

A membrane electrode assembly of Example 9 was obtained as in Example 7, except that the amount of the carbon nanofibers was reduced to 1/2 of that of Example 7 when preparing the oxygen electrode catalyst ink.

[Example 10]

A membrane electrode assembly of Example 10 was obtained as in Example 7, except that the amount of the carbon nanofibers was reduced to 1/5 of that of Example 7 when preparing the oxygen electrode catalyst ink.

[Example 11]

A membrane electrode assembly of Example 11 was obtained as in Example 7, except that the amount of the polyelectrolyte was reduce to 2/3 of that of Example 7 when preparing the oxygen electrode catalyst ink.

[Example 12]

Catalyst inks were prepared as in Example 7. The oxygen electrode catalyst ink was applied to a surface of a PTFE film using a slit die coater to form a coating film having a thickness of 150 $\mu$m. Next, the PTFE film provided with the coating film was placed in a hot air oven heated to 80°C and dried until the tackiness of the coating film disappeared to form a transfer substrate having an oxygen electrode-side electrocatalyst layer. Next, the fuel electrode catalyst ink was applied to a surface of another PTFE film using a slit die coater to form a coating film having a thickness of 100 $\mu$m. Next, the PTFE film provided with the coating film was placed in a hot air oven heated to 80°C and dried until the tackiness of the coating film disappeared to form a transfer substrate having a fuel electrode-side electrocatalyst layer.
The transfer substrate having an oxygen electrode-side electrocatalyst layer was placed face-to-face on one surface of a polyelectrolyte membrane (Nafion (trademark) 211 manufactured by Dupont), and the transfer substrate having a fuel electrode-side electrocatalyst layer was placed face-to-face on the other surface of the polyelectrolyte membrane to form a laminate. The laminate was hot-pressed at a temperature of 120°C and a pressure of 1 MPa. In this way, the two electrocatalyst layers were bonded to the polyelectrolyte membrane. Next, the PTFE films were separated from the respective electrocatalyst layers to obtain a membrane electrode assembly of Example 12.

[Comparative Example 6]

A membrane electrode assembly of Comparative Example 6 was obtained as in Example 7, except that the amount of the carbon nanofibers was increased to 2 times of that of Example 7 when preparing the oxygen electrode catalyst ink.

[Comparative Example 7]

A membrane electrode assembly of Comparative Example 7 was obtained as in Example 7, except that the amount of the polyelectrolyte was increased to 2 times of that of Example 7 when preparing the oxygen electrode catalyst ink.

[Comparative Example 8]

A membrane electrode assembly of Comparative Example 8 was obtained as in Example 7, except that carbon nanotubes (NC7000 manufactured by Nanocyl SA) were used in place of the carbon nanofibers (VGCF (trademark)-H manufactured by Showa Denko K.K.) when preparing the oxygen electrode catalyst ink.

[Comparative Example 9]

A membrane electrode assembly of Comparative Example 9 was obtained as in Example 7, except that the amount of the carbon nanofibers was increased to 2 times of that of Example 7 when preparing the fuel electrode catalyst ink.

[Comparative Example 10]

A membrane electrode assembly of Comparative Example 10 was obtained as in Example 7, except that no carbon nanofibers were added when preparing the individual catalyst inks.

[Calculation based on pore volume Vp]

Distribution of the pore volume Vp was measured using mercury intrusion porosimetry. Specifically, a membrane electrode assembly having a size of about 25 cm$^2$ was prepared, and the pore volume Vp was measured using an automated porosimeter (Autopore IV9510 manufactured by Micromeritix). The measurement cell had a volume of about 5 cm$^3$, and the pressure of mercury intrusion was increased stepwise from 3 kPa to 400 MPa. In this way, the intruded amount of mercury, or the pore volume Vp, at each pressure was obtained. The pressure of mercury intrusion was converted to a pore size D using Washburn's equation, and the pore volume Vp against the pore size D was plotted as a distribution function dVp/dlogD (log differential pore volume distribution). The surface tension $\gamma$ was taken to be 0.48 N/m, and the contact angle $\theta$ was taken to be 130°. The pore size D corresponding to the peak of the plot was read out as a pore size Dp.

The volumes of all the pores having a pore size D of 3 nm or more and 5.5 $\mu$m or less were integrated to calculate a first integrated volume. A second integrated volume was calculated by integrating the volumes of the pores having a pore volume of 50 nm or less, and a third integrated volume was calculated by integrating the volumes of the pores having a pore volume of 100 nm or more. The second integrated volume was divided by the first integrated volume, and the quotient was multiplied by 100 to calculate a percentage R(S) of the second integrated volume to the first integrated volume. Furthermore, the third integrated volume was divided by the first integrated volume, and the quotient was multiplied by 100 to calculate a percentage R(L) of the third integrated volume to the first integrated volume.

[Calculation of first integrated volume with respect to mass of catalytic material]

Using mercury intrusion porosimetry, the volumes of all the pores having a pore size D of 3 nm or more and 5.5 $\mu$m or less were integrated to calculate a first integrated volume, which was divided by the mass of the catalytic material. The mass of the catalytic material was represented by the mass or the dry mass obtained from the coating amount of the catalyst-layer slurry. In the case of obtaining the mass of the catalytic material from the coating amount, the solid content (mass %) of the catalyst-layer slurry was obtained in advance, and the mass of the catalytic material was obtained from the predetermined coating amount and mass of solid content. Furthermore, in the case of obtaining the mass of the catalytic material from the dry mass, the mass of the catalytic material was obtained by processing the electrocatalyst layer into the predetermined size and measuring the mass.

[Calculation of integrated pore volume with respect to geometric volume of electrocatalyst layer]

Next, the volumes of all the pores having a pore size D of 3 nm or more and 5.5 $\mu$m or less were integrated to calculate an integrated pore volume V Also, the area and thickness of the membrane electrode assembly subjected to measurements using the automated porosimeter were multiplied together to calculate a geometric volume of the membrane electrode assembly. Furthermore, the area of the membrane electrode assembly subjected to measurements using the automated porosimeter was multiplied by the thickness of the polyelectrolyte membrane to calculate a volume of the polyelectrolyte membrane. The volume of the polyelectrolyte membrane was subtracted from the volume of the membrane electrode assembly to calculate a geometric volume $V_0$ of the electrocatalyst layers. Then, a percentage of the integrated pore volume V to the geometric volume $V_0$ of the electrocatalyst layers ($V/V_0$) was calculated.

[Measurements of thickness of electrocatalyst layer]

A cross section of the membrane electrode assembly was observed using a scanning electron microscope (SEM) to measure the thicknesses of the membrane electrode assembly, the cathode-side electrocatalyst layer, the anode-side electrocatalyst layer, and the polyelectrolyte membrane. Specifically, a cross section of the membrane electrode assembly was observed at 1,000 times magnification using a scanning electron microscope (FE-SEM S-4800 manufactured by Hitachi High-Technologies, Ltd.). The thickness of each layer was measured at 30 observation points of the cross section of the electrocatalyst layers. The average thickness at the 30 observation points was defined to be the thickness of each layer.

[Measurements of power generation performance]

Power generation performance was measured using the method according to a booklet titled "Cell unit evaluation and analysis protocol" and published by the New Energy and Industrial Technology Development Organization (NEDO). A JARI standard cell was used as a single cell unit for evaluation. In the JARI standard cell, a gas diffusion layer, a gasket, and a separator were arranged on each surface of a membrane electrode assembly and pressed against the surface to achieve a predetermined surface pressure. Then, the I-V measurement was performed according to the method described in the booklet "Cell unit evaluation and analysis protocol". These conditions were defined to be standard conditions. Also, the I-V measurement was performed by setting the relative humidities of both of the anode and cathode to RH 100%. These conditions were defined to be high humidity conditions.

[Measurements of durability]

For measuring durability, the same single cell unit as in the measurements of power generation performance was used as a single cell unit for evaluation. Durability was measured by performing the humidity cycle test described in the booklet "Cell unit evaluation and analysis protocol" mentioned above.

[Comparison results]

Table 2 shows results on the following items for the membrane electrode assemblies of Examples 7 to 12 and Comparative Examples 6 to 10. Specifically, in the membrane electrode assemblies, the first integrated volume ($\Sigma Vp1$) with respect to the mass M of the catalytic material forming the membrane electrode assembly ($\Sigma Vp1/M$), and the thickness T ($\mu$m) of the electrocatalyst layer were as shown in Table 2. Also, in the membrane electrode assemblies, the pore size Dp at the peak of the distribution curve of the pore volume Vp, the percentage R(L) (%) of the third integrated volume to the first integrated volume, and the percentage R(S) (%) of the second integrated volume to the first integrated volume were as shown in Table 2. Furthermore, in the membrane electrode assemblies, the percentage $V/V_0$ (%) of the first integrated volume V to the volume $V_0$ of the electrocatalyst layer was as shown in Table 2.

Furthermore, Table 2 shows measurement results on power generation performance and durability of the polymer electrolyte fuel cells respectively including membrane electrode assemblies of Examples 7 to 12 and Comparative Examples 6 to 10.

For the results of power generation performance under the standard conditions, the single cell units having a current of 25 A or more at a voltage of 0.6 V were evaluated as good, and those of less than 25 A were evaluated as poor. Under the high humidity conditions, single cell units having a current of 30 A or more at a voltage of 0.6V were evaluated as good, and those of less than 30 A were evaluated as poor. For durability, single cell units having a hydrogen cross leak current of less than 10 times the initial value after the lapse of 10,000 cycles were evaluated as good, and those of 10 times or more the initial value were evaluated as poor.

[Table 2]

| | ΣVp1 (cm') | M (mg) | ΣVp1/M (cm3/mg) | T (μm) | Dp (μm) | R(L) (%) | R(S) (%) | V/V$_0$ (%) | Power generation performance | | Durability |
|---|---|---|---|---|---|---|---|---|---|---|---|
| | | | | | | | | | Standard | High humidity | |
| Ex. 7 | 0.0359 | 11.19 | 3.21 | 24 | 0.051 | 12 | 55 | 60 | Good | Good | Good |
| Ex. 8 | 0.0386 | 11.15 | 3.46 | 23 | 0.051 | 12 | 55 | 60 | Good | Good | Good |
| Ex. 9 | 0.0344 | 11.43 | 3.01 | 22 | 0.051 | 12 | 55 | 60 | Good | Good | Good |
| Ex. 10 | 0.0322 | 11.36 | 2.83 | 21 | 0.051 | 12 | 55 | 60 | Good | Good | Good |
| Ex. 11 | 0.0369 | 11.08 | 3.33 | 23 | 0.051 | 12 | 55 | 60 | Good | Good | Good |
| Ex. 12 | 0.0315 | 11.10 | 2.84 | 20 | 0.051 | 12 | 55 | 60 | Good | Good | Good |
| Co. Ex. 6 | 0.0523 | 10.97 | 4.77 | 33 | 0.051 | 12 | 55 | 60 | Poor | Poor | Good |
| Co. Ex. 7 | 0.0297 | 11.21 | 2.65 | 26 | 0.051 | 12 | 55 | 60 | Poor | Poor | Poor |
| Co. Ex. 8 | 0.0283 | 11.33 | 2.5 | 22 | 0.051 | 12 | 55 | 60 | Good | Poor | Poor |
| Co. Ex. 9 | 0.0665 | 10.85 | 6.13 | 18 | 0.051 | 12 | 55 | 60 | Good | Poor | Good |
| Co. Ex. 10 | 0.0288 | 11.74 | 2.45 | 16 | 0.051 | 12 | 55 | 60 | Good | Poor | Poor |

As shown in Table 2, in all of Examples 7 to 12, the first integrated volume with respect to the mass M of the catalytic material ($\Sigma$Vp1/M) was in the range of 2.8 or more and 4.5 or less.

In all of Examples 7 to 12, power generation performance was evaluated as good and durability was also evaluated as good, regardless of the measurement conditions. Specifically, the membrane electrode assemblies of Examples 7 to 12 were capable of forming a polymer electrolyte fuel cell having good power generation performance and good durability.

In contrast, in all of Comparative Examples 6 to 10, the first integrated volume with respect to the mass M of the catalytic material ($\Sigma$Vp1/M) was outside the range of 2.8 or more and 4.5 or less.

In Comparative Examples 6 to 10, power generation performance was evaluated as poor under the standard conditions and/or high humidity conditions. Furthermore, in Comparative Examples 7, 8 and 10, durability was also evaluated as poor. Thus, according to Comparative Examples 6 to 10, power generation performance and/or durability were impaired, compared to the examples described above.

As described above, according to the second embodiment of the membrane electrode assembly and the fuel cell, the advantageous effects enumerated below can be achieved.

(5) In each of the fuel electrode- and oxygen electrode-side electrocatalyst layers 12A and 12C, when the first integrated volume with respect to the mass of the catalytic material is in the range of 2.8 or more and 4.5 or less, the pores can include those pores which have relatively large diameters in the above range, so that the three-phase interface can be maintained in the electrocatalyst layer 12, and gas diffusion and drainage of the produced water can be enhanced in the electrocatalyst layer 12.

[Reference Signs List]

| | |
|---|---|
| 10 | Membrane electrode assembly, |
| 11 | Polyelectrolyte membrane, |
| 12 | Electrocatalyst layer, |
| 12A | Fuel electrode-side electrocatalyst, |
| 12C | Oxygen electrode-side electrocatalyst layer, |
| 13A | Fuel electrode-side gasket, |
| 13C | Oxygen electrode-side gasket, |
| 21 | Catalytic material, |
| 22 | Electrically conductive carrier, |
| 23 | Polyelectrolyte, |
| 24 | Fibrous material, |
| 30 | Polymer electrolyte fuel cell, |
| 30A | Fuel electrode, |
| 30C | Oxygen electrode, |
| 31A | Fuel electrode-side gas diffusion layer, |
| 31C | Oxygen electrode-side gas diffusion layer, |
| 32A | Fuel electrode-side separator, |
| 32Ag, 32Cg | Gas flow channel, |
| 32Aw, 32Cw | Cooling water flow channel, |
| 32C | Oxygen electrode-side separator |

**Claims**

1. A membrane electrode assembly for use in a polymer electrolyte fuel cell, comprising

a polyelectrolyte membrane having a first surface and a second surface facing away from the first surface;
a fuel electrode-side electrocatalyst layer bonded to the first surface and containing a first catalytic material, a first electrically conductive carrier supporting the first catalytic material, and a first polyelectrolyte; and
an oxygen electrode-side electrocatalyst layer bonded to the second surface and containing a second catalytic material, a second electrically conductive carrier supporting the second catalytic material, a second polyelectrolyte, and a fibrous material, wherein
the fuel electrode-side electrocatalyst layer and the oxygen electrode-side electrocatalyst layer contain voids which include pores having a diameter of 3 nm or more and 5.5 $\mu$m or less;

a pore size, that is a pore diameter, is calculated from a pore volume which is measured using mercury intrusion porosimetry; and

when an integrated pore volume for all the pores in the fuel electrode side-electrocatalyst layer and the oxygen electrode-side electrocatalyst layers is a first integrated volume, a value obtained by dividing the first integrated volume by a mass of a catalytic material, that is a mass of the catalytic material contained in both of the electrocatalyst layers, is in a range of 2.8 or more and 4.5 or less.

2. The membrane electrode assembly according to claim 1, wherein
when an integrated pore volume for the pores having a pore size of 50 nm or less is a second integrated volume, a percentage of the second integrated volume to the first integrated volume is in a range of 25% or more and 45% or less in at least one of the fuel electrode-side electrocatalyst layer and the oxygen electrode-side electrocatalyst layer.

3. The membrane electrode assembly according to claim 1 or 2, wherein
when an integrated pore volume for the pores having a pore size of 90 nm or more is a third integrated volume, a percentage of the third integrated volume to the first integrated volume is in a range of 15% or more and 35% or less in at least one of the fuel electrode-side electrocatalyst layer and the oxygen electrode-side electrocatalyst layer.

4. The membrane electrode assembly according to any one of claims 1 to 3, wherein
the pore size at a peak of a distribution curve indicating the pore volume plotted against the pore size is in a range of 0.06 $\mu$m or more and 0.11 $\mu$m or less in at least one of the fuel electrode-side electrocatalyst layer and the oxygen electrode-side electrocatalyst layer.

5. The membrane electrode assembly according to any one of claims 1 to 4, wherein

the fibrous material contains one or more types of fibers selected from electron-conducting fibers and proton-conducting fibers; and
the electron-conducting fibers contain at least one type of fibers selected from a group consisting of carbon nanofibers, carbon nanotubes, and transition metal-containing fibers.

6. The membrane electrode assembly according to any one of claims 1 to 5, wherein

the fuel electrode-side electrocatalyst layer further contains a fibrous material; and
when the fibrous material contained in the fuel electrode-side electrocatalyst layer is a first fibrous material, and the fibrous material contained in the oxygen electrode-side electrocatalyst layer is a second fibrous material, a mass of the first fibrous material per unit volume of the fuel electrode-side electrocatalyst layer is larger than a mass of the second fibrous material per unit volume of the oxygen electrode-side electrocatalyst layer.

7. The membrane electrode assembly according to any one of claims 1 to 6, wherein
the oxygen electrode-side electrocatalyst layer has a thickness in a range of 5 $\mu$m or more and 30 $\mu$m or less.

8. The membrane electrode assembly according to any one of claims 1 to 7, wherein
the fuel electrode-side electrocatalyst layer has a thickness in a range of 5 $\mu$m or more and 20 $\mu$m or less.

9. The membrane electrode assembly according to claim 1, wherein
when an integrated pore volume for the pores having a pore size of 50 nm or less is a second integrated volume, a percentage of the second integrated volume to the first integrated volume is in a range of 25% or more and 55% or less in at least one of the fuel electrode-side electrocatalyst layer and the oxygen electrode-side electrocatalyst layer.

10. The membrane electrode assembly according to claim 1 or 9, wherein
when an integrated pore volume for the pores having a pore size of 90 nm or more is a third integrated volume, a percentage of the third integrated volume to the first integrated volume is in a range of 10% or more and 35% or less in at least one of the fuel electrode-side electrocatalyst layer and the oxygen electrode-side electrocatalyst layer.

11. A polymer electrolyte fuel cell comprising the membrane electrode assembly according to any one of claims 1 to 10.

## FIG.1

## FIG.2

FIG.3

# FIG.4

# FIG.5

FIG.6

PORE SIZE D （μm）

## INTERNATIONAL SEARCH REPORT

| | International application No. |
|---|---|
| | PCT/JP2021/015062 |

A. CLASSIFICATION OF SUBJECT MATTER
Int. Cl. H01M4/86(2006.01)i, H01M8/10(2016.01)i
FI: H01M4/86 M, H01M8/10 101

According to International Patent Classification (IPC) or to both national classification and IPC

B. FIELDS SEARCHED

Minimum documentation searched (classification system followed by classification symbols)
Int. Cl. H01M4/86, H01M8/10

Documentation searched other than minimum documentation to the extent that such documents are included in the fields searched
Published examined utility model applications of Japan        1922-1996
Published unexamined utility model applications of Japan      1971-2021
Registered utility model specifications of Japan              1996-2021
Published registered utility model applications of Japan      1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2019-186210 A (TOPPAN PRINTING CO., LTD.) 24 October 2019, claims 2-3, 5-6, paragraphs [0028]-[0031], [0066]-[0068] | 1-11 |
| A | JP 2010-80369 A (TOPPAN PRINTING CO., LTD.) 08 April 2010, claim 1, paragraphs [0041], [0066], [0067] | 1-11 |
| P, A | JP 2020-132965 A (TOSHIBA CORP.) 31 August 2020, claim 1, paragraphs [0013], [0017] | 1-11 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04.06.2021 | 15.06.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

International application No.

PCT/JP2021/015062

| Patent Documents referred to in the Report | Publication Date | Patent Family | Publication Date |
|---|---|---|---|
| JP 2019-186210 A | 24.10.2019 | US 2021/0013524 A1<br>claims 1, 9-10, 12,<br>18, paragraphs<br>[0042]-[0049],<br>[0091]-[0093]<br>EP 3780192 A1<br>CN 111902982 A<br>WO 2019/189839 A1 | |
| JP 2010-80369 A | 08.04.2010 | US 2010/0062306 A1<br>claims 1, 16,<br>paragraphs [0087],<br>[0169], [0170] | |
| JP 2020-132965 A | 31.08.2020 | US 2020/0270756 A1<br>claim 1, paragraphs<br>[0027], [0031] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10241703 A

- JP 5537178 B